(19) Europäisches Patentamt
European Patent Office
Office européen des brevets

(11) Publication number: **0 110 352**
**B1**

(12) **EUROPEAN PATENT SPECIFICATION**

(45) Date of publication of patent specification: **04.04.90**

(51) Int. Cl.$^5$: **H 03 M 13/00**

(21) Application number: **83111843.5**

(22) Date of filing: **25.11.83**

(54) **Digital information transmitting system and digital information receiving apparatus.**

(30) Priority: **30.11.82 JP 208608/82**
**30.11.82 JP 210404/82**
**30.11.82 JP 210405/82**

(43) Date of publication of application:
**13.06.84 Bulletin 84/24**

(45) Publication of the grant of the patent:
**04.04.90 Bulletin 90/14**

(84) Designated Contracting States:
**DE FR GB**

(56) References cited:
**EP-A-0 133 697**
**WO-A-84/04218**
**DE-A-2 915 067**

(73) Proprietor: **NIPPON HOSO KYOKAI**
**No 2-1, Jinnan 2-chome Shibuya-ku**
**Tokyo 150 (JP)**

(73) Proprietor: **KABUSHIKI KAISHA TOSHIBA**
**72, Horikawa-cho Saiwai-ku**
**Kawasaki-shi Kanagawa-ken 210 (JP)**

(72) Inventor: **Kawai, Naoki**
**1-7-5, Bessho**
**Urawa-shi Saitama-ken (JP)**
Inventor: **Yoshino, Takehiko**
**1115-77, Kamiogino**
**Atsugi-shi Kanagawa-ken (JP)**
Inventor: **Endoh, Kenjiro**
**212 Tamagawa-House 3-32-1, Yaguchi**
**Oota-ku Tokyo (JP)**
Inventor: **Kitagawa, Kazuo**
**1604-13, Ida**
**Nakahara-ku Kawasaki-shi (JP)**
Inventor: **Ohno, Kaiji**
**2-9-1, Kanasugi Funabashi-shi**
**Chiba-ken (JP)**

(74) Representative: **Blumbach Weser Bergen**
**Kramer Zwirner Hoffmann Patentanwälte**
**Radeckestrasse 43**
**D-8000 München 60 (DE)**

**EP 0 110 352 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

The present invention relates to a digital information transmitting system and a digital information receiving apparatus, which can use a simple bit error correcting method effective for improving an error correcting capacity, limiting the range of transmission data and suppressing noise.

A variety of methods of correcting the error of a code are known as disclosed in the following references:

Hamming, R. W.; "Error Detecting and Error Correcting Code" BSTJ Vol. 29, 1950.

Peterson, W. W.: "Error Correcting Codes" MIT Press, 1961.

Massey, J. L.; "Shift Register Synthesis and BCH Decoding" IEEE Trans. Vol. IT15, No. 1, 1969.

Peterson, W. W. and D. T. Brown; "Cyclic Codes for Error Detection: PIRE, Vol. 49, 1961.

Fig. 1 shows an example of a frame structure of data which is employed in a conventional error detecting and correcting system. A frame has a 56-bit data section 11 and a 7-bit detecting code section 12, totally 63 bits. According to a BCH detecting method, a code error in 1 bit of the data section 11 and the detecting code section 12 can be corrected by employing the 7-bit detecting code. A code error in 2 bits can also be detected. In other words, the code error detecting capacity up to 2 bits can be provided.

When an increase in the code error correcting capacity described above is desired, a frame has, as shown in Fig. 2, a 50-bit data section 11 and a 13-bit detecting code section 12. Thus, the code error correcting capacity can be increased up to 2 bits, and the code error detecting capacity can be increased up to 3 bits.

However, when the bit length of the detecting code section 12 is increased to enhance the code error correcting capacity and the code error detecting capacity, the redundancy of the data, on the other hand, increases. Inevitably, the process for correcting and detecting the error is remarkably complicated, resulting in the necessity of a large-scale processing circuit which is very expensive.

The BCH type detecting is also utilized at the receiving side even when an analog signal is coded, converted to a digital signal and transmitted. For example, there is known a system for transmitting the audio signal by converting the audio signal into a PCM signal.

There are a linear coding system and a companding coding system (a nonlinear coding system) for coding an analog signal. In the linear coding system, a quantization step is uniform over all levels of the signal. In the companding coding system, the quantization step varies in response to the signal level. Further, in the companding coding system, there are an instantaneous companding coding system for transmitting information relative to companding at every sampling and a near-instantaneous companding coding system for transmitting information of companding at every constant time interval.

Figs. 3 to 5 show the relationships between input/output levels and quantization level in a linear coding system, an instantaneous companding coding system and a near-instantaneous companding coding system.

Fig. 3 shows an example of a 14 bits linear coding, and the input/output levels and the quantization level have a linear relation over the entire level. Since the quantization step size is uniform in this system, the system does not produce a breathing effect that the quantization step size varies due to the large variation in the signal level. Hence, a pure voice of high quality can be obtained.

Fig. 4 shows the relationship between the input/output level and the quantization level in an instantaneous companding coding system for compressing 14 bits into 12 bits. When the input/output levels are low in this system, the quantization step is small, while when the input/output levels are high, the quantization step is large. Since the quantization step is divided into several stages in response to the input/output levels in this system, the relationship between the input/output levels and the quantization level becomes folded lines. When the signal level is high, the property is utilized that, even if the quantization level is high, the quantization noise appears as low as not to be recognized in the hearing sense. According to this system, the number of transmission bits can be reduced as compared with that of the linear encoding system. According to a 12-bit instantaneous companding encoding system, the quality of sound which is near the sound that is processed by the 14-bit linear coding system having 2 bits more than the 12 bits instantaneous companding coding system can be obtained.

Fig. 5 shows the relationship between the input/output level and the quantization level of a near-instantaneous companding coding system for compressing 14 bits into 10 bits. This system has 5 scales (0)—(4) which are different in the quantization steps. The scale which can express the maximum input/output level in a predetermined period is selected from the 5 scales (0)—(4), and transmitted as scale data.

Fig. 6 shows an example of a near-instantaneous companding coder according a near-instantaneous companding coding system. In this coder, the sampling frequency is 32 kHz. The data signal of the input terminal 15 is delayed at the data signal sampled 32 times per 1 ms in a delay circuit 16. The delayed data signal is input to a compressor 17. A scale selector 18 determines a scale used in the period of 32 times samplings and outputs scale data representing the scale in the 32 times sampling period. The compressor 17 compresses 14 bits into 10 bits in response to the scale data. The compressed data signal is delayed in a delay circuit 19 by 32 times samplings and output to an output terminal 20. According to this system, the scale data is not transmitted at every sampling, but transmitted once in a predetermined period (32 sampling periods). Accordingly, the quantity of companding information to be transmitted is reduced. In the example of the near-instantaneous companding coding system shown in Fig. 5, the input/output level corresponding to the 14 bits of the linear coding system can be expressed by the quantization level of 10 bits. Thus, the number of transmission bits can be reduced by 4 bits as compared with the linear coding system, except for the companding information (scale data). In this case, 3 bits are necessary as the scale data to identify the 5 scales, and the accurate number of transmission bits including the companding information is approx. 10.1 bits per 1 sampling. Therefore, the near-instantaneous companding coding system is excellent when the transmission capacity is limited.

The noises of in the bit errors of the above-described coding systems of three types will be discussed below.

. When bit errors are produced in the linear coding system and the instantaneous companding coding system, an error is produced over the entire range of the input/output levels. For example, when an error is produced in a bit near the MSB (most significant bit), a large noise is heard when the data including the error is reproduced. On the other hand, even if a bit error is produced in the near-instantaneous companding coding system, the demodulated error is limited to the range determined by the scale data unless the bit of the scale data is missed. Consequently, when the input/output level is low, the noise due to the bit error is limited to the relatively low value. In other words, the near-instantaneous companding coding system has a feature that the noise due to the bit error can be reduced.

In a digital information transmission system employing the above-described linear coding system, instantaneous companding coding system and near-instantaneous companding coding system, data transmission added with the detecting code (12) shown in Figs. 1 and 2 is performed. Accordingly, in enhancing the code error correcting capacity and the code error detecting capacity in such a system, there will arise the problems that error correction, complication of processing for correcting and detecting the error, and large-scale processing circuits are necessary.

The document DE—A—29 15 067 discloses a method for reducing redundancy with a transmission of digitally coded analog signals. The main point of this known method resides in a transmission, where binary coded sample values of an analog signal are transmitted with a varying block length, i.e. the leading zeros of each binary coded sample value are not transmitted and replaced by an additionally transmitted range information corresponding to the number of bits of each transmitted binary coded value.

An object of the present invention is to provide a digital information transmitting system and a digital information receiving apparatus which can improve the code error correcting and detecting capacities by a simple method and can accurately correct the code and detect the code error.

Another object of the present invention is to provide a digital information transmitting system and a digital information receiving apparatus which can improve the code correcting and code error detecting capacities even when an analog signal having large variation in the amplitude is quantized and transmitted, thereby remarkably improving the quality of the decoded output.

To achieve the above and other objects, there is provided, according to the present invention, a digital information transmitting system comprising means for obtaining a sequence of first data as digital information to be transmitted, means for dispatching the first data without compression, means for examining the first data during a predetermined period and detecting within which ranges of predetermined areas all values of the data fall, and means for adding the second data representing the range to the first data at the every period and dispatching the data.

There is further provided according to the present invention a digital information receiving apparatus comprising, means for receiving first data as digital information to be transmitted and second data representing the range of the value of first data at every predetermined period, means for analyzing the second data and detecting invalid data section common for all first data, and means for correcting the error of the data of the invalid data section common for the first data according to a predetermined rule.

This invention can be more fully understood from the following detailed description when taken in conjunction with the accompanying drawings, in which:

Figs. 1 and 2 are views showing examples of data formats adopted in conventional error detecting and correcting system;

Fig. 3 is a characteristic diagram showing the relationship between the input/output levels and the quantization level in a linear coding system;

Fig. 4 is a characteristic diagram showing the relationship between the input/output level and the quantization level in a 12-bit instantaneous companding coding system;

Fig. 5 is a characteristic diagram showing the relationship between the input/output level and the quantization level in a near-instantaneous companding coding system;

Fig. 6 is a structural explanatory view of a conventional near-instantaneous companding coder;

Fig. 7 is a view showing data format employed in a system according to an embodiment of the present invention;

Fig. 8 is a view showing the relationship between the length of valid data section of first data and second data;

Fig. 9 is a view showing an example that an error is produced in the data shown in Fig. 7;

Fig. 10 is a view showing an example that an error is produced in the data shown in Fig. 7;

Fig. 11 is a view showing a signal processor employing a system according to an embodiment of the present invention;

Fig. 12 is a view showing the relationship between the length of valid data section of the first data representing positive or negative and the second data;

Fig. 13 is a view showing a signal processor employing a system according second embodiment of the present invention;

Figs. 14, 15 and 16 are views showing examples of data signals;

Fig. 17 is a view showing for explaining the probability of producing mis-correcting;

Fig. 18 is a view showing a signal processor for explaining a third embodiment of the present invention;

Fig. 19 is a view showing the relationship between the input/output levels and the quantization level and the range zones for explaining a fourth embodiment of the present invention;

Fig. 20 is a view showing a signal processor at the transmission side used in the fourth embodiment;

Fig. 21 is a view showing an example the formats of input data signal and output data signal in the circuit shown in Fig. 20;

Fig. 22 is a view showing a signal processor at the receiving side employed in the fourth embodiment;

Fig. 23 is a view showing a signal processor at the transmitting side illustrated for explaining a fifth embodiment of the present invention;

Fig. 24 is a view showing an example of a noise suppressing circuit at the receiving side used in the fifth embodiment;

Fig. 25 is a view showing the relationship between the input/output levels and the quantization level and the range zones for explaining a sixth embodiment of the present invention;

Fig. 26 is a view showing a signal processor at the receiving side employed in the sixth embodiment;

Fig. 27 is a view showing the relationship between the input/output level and the quantization level and the range zones for explaining a seventh embodiment of the present invention;

Fig. 28 is a view showing a signal processor at the receiving side employed in the seventh embodiment;

Figs. 29 and 30 are views showing the relationship between the input/output level and the quantization level and the range zones for explaining an eighth embodiment of the present invention; and

Fig. 31 is a view showing a signal processor at the receiving side employed in the eighth embodiment.

The present invention will now be described in more detail with reference to the accompanying drawings.

Fig. 7 shows an example of the format of transmission data used in the present invention. This transmission data has first data X of 16 bits in code length, second data Y of 2 bits representing the length of valid data section of the first data X, and an error detecting code C for the first data X. The first data X is represented as below when the code bit element is, for example Xi,

$$X = \sum_{j=1}^{16} X_{j-1} \times 2^{j-1}$$

The second data Y is defined, for example, as shown in Fig. 8 for the first data X.

Y=(0, 0) when the valid length of the first data X is less than 7 bits.

Y=(0, 1) when the valid length of the first data X is 8—10 bits.

Y=(1, 0) when the valid length of the first data X is 11—13.

Y=(1, 1) when the valid length of the first data X is more than 14 bits.

Further, a BCH code according to a BCH system is employed as the error detecting code C.

Even the first data prepared with 16 bits as code length might not have substantial meaning in the several upper bits according to the value. Accordingly, when the valid data section A21 of the first data X is identified by the second data Y, invalid data section A22 can be substantially ignored. The invalid data section is shown by shaded lines in Fig. 8.

The present invention aims at the above-described points of view. When the data of the format shown in Fig. 7 is received, the valid data section of the first data X is first identified from the second data Y. Thus, code errors of the invalid data section in the first data X can be corrected according to a predetermined rule.

Since the invalid data section, for example, is not used for transmitting information, all bits are set to the same value, f.i. to "0". Thus, a bit becoming "1" indicates a code error and is unconditionally substituted by "0".

When Y=(0, 1) in the second data Y, for example, as shown in Fig. 9, the valid data section of the first data X is less than 10 bits, and the invalid data section comprises bits 11—16, where $x_{12}$ in the invalid data section is "1", and it is understood that a code error is produced. Consequently, when the content of the $x_{12}$ is substituted, the code error of the invalid data section is eliminated.

Fig. 10 shows the data of Y=(0, 0) in the second data Y. If Y=(0, 0), the valid data section of the first data X is less than 7 bits. Accordingly, in this case, it is understood that $x_{11}$ and $x_{13}$ of the invalid data section result from code errors, and they can be corrected.

As described above, after code errors of the invalid data section are corrected, the detecting code C is utilized, thereby detecting any error of the first data X. When the detecting code according to the above-described BCH system of 7 bits is employed at this time, 1 bit error correction and 2 bits error detection can be performed.

According to the present invention, since the error correction of at least invalid data section can be completely performed irrespective of the number of bits, the error detecting and correcting capacities can be remarkably improved for the data X when the error correction is performed with the detecting code.

Fig. 11 shows an example of a processor for performing the above-described processing.

A data signal of the format shown in Fig. 7 is inputted to an input terminal 25. Second data Y is inputted to a decoder 26, and first data X and detecting code C are inputted to a gate circuit 27. The decoder 26 analyzes the second data Y and detects the valid data section (valid bit number) of the first data X. The detected information is applied to a counter 28. The counter 28 counts clock signals CK of the period equal to the transfer time of the data for the number of bits (the number of bits of the invalid data section) applied from the decoder 26. The counter 28 closes the gate circuit 27 for the counting period. The gate circuit 27 is opened in the valid data section X and the detecting code section C. On the contrary, when the second data Y is disposed at the rear stage of the data format, time regulation is performed until the second data Y is detected in the decoder 26. In other words, delay means is provided between the input terminal 25 and the gate circuit 27.

The first data X including the invalid data section which is completely corrected for errors and the detecting code C are inputted by the processor through the gate circuit 27 to a BCH decoder 29. When the invalid data section is transferred, the gate circuit 27 is closed. Thus, the bit codes of the invalid data section are all substituted by "0", and applied to the BCH decoder 29.

The BCH decoder 29 detects errors of the first data X and corrects errors on the basis of the detecting code C and outputs its output data to an output terminal 30.

According to the system of the present invention as described above, the code error detecting and correction can be extremely simply and effectively performed.

The above-described example shows the case that the polarity of the first data X is fixed, but when the numeric value of the first data X may be positive or negative, second data Y shown in Fig. 12 is, for example, defined. In this example, the negative number is represented as the complement of 2, and the MSB ($x_{15}$) is utilized as a sign bit. In this case, the first data X is represented by

$$X \sum_{j=1}^{16} X_{j-1}\times 1^{j-1}-2^{15}$$

In this case, the second data Y is defined, for example, as shown in Fig. 12 for the first data X.

Y=(0, 0) when the valid length of the first data X is less than 7 bits.

Y=(0, 1) when the valid length of the first data X is 8—10 bits.

Y=(1, 0) when the valid length of the first data X is 11—13 bits.

Y=(1, 1) when the valid length of the first data X is more than 14 bits.

The fact that the code of the invalid data section A22 becomes the same code as the sign bit (MSB) is utilized.

Fig. 13 shows a processor for detecting and correcting errors on the basis of the principle shown in Fig. 12. A data signal is input through an input terminal 25 to a gate circuit 27, and also input to a decoder 26 and an MSB memory 31. The decoder 26 analyzes the second data Y and detects the valid data section (valid bit number) of the first data X. The detected information is applied to a counter 28. This counter 28 counts clock signals CK of the period equal to the transfer time of the above data for the bit number applied from the decoder 26. Consequently, the valid data of the first data X is input through the gate circuit 27 to a BCH decoder 29.

On the other hand, the sign bit shown in Fig. 12 is stored in the MSB memory 31. When the invalid data section is transferred, a gate circuit 32 is conducted by the output of the counter 28, and the data of the same content as the sign bit is inputted as invalid data to the BCH decoder 29. Consequently, according to the second embodiment of the present invention, the error bits of the invalid data section are corrected to become the same content as the sign bit. Even if the content of the first data X is the content representing positive or negative, the error can be effectively corrected.

The present invention is not limited to the particular embodiments as described above. For example, even when an error is produced in the sign bit (MSB), it may be detected and the error of the invalid data section may be corrected.

Assume that the second data Y is defined as shown in Fig. 12 for the first data X as to the data transmission. The area represented by A21 is a valid data section, and the area represented by A22 is an invalid data section. The sign bit (MSB) is defined to be "0" when the valid data section shows positive numeric value and "1" when the valid data section shows negative numeric value.

Assume that the data signal representing 490 of numeric value as shown in Fig. 14 is transmitted. A receiving apparatus first analyzes the second data Y, and detects the bit number of the valid data section A21 in the first data X. Thus, the bit number of the invalid data section A22 in the first data X is also simultaneously detected. In case of the data shown in Fig. 14, the fact that the valid data section A21 is 10 bits is detected from the second data Y. Since the sign bit $x_{15}$ is "0", the fact that the bit code $x_{13}$ is wrong is detected. Such an error can be corrected by the embodiment shown in Fig. 13. In case of the data signal representing the numeric value of −11 as shown in Fig. 15, the valid data section A21 is less than 7 bit from the second data Y and the sign bit $x_{15}$ is "1". Accordingly, the fact that the bit codes $x_{12}$, $x_{10}$ are wrong is detected. This error can be corrected by the embodiment shown in Fig. 13.

However, it is assumed that, even if the data signal representing the numeric value of −11 as shown in Fig. 16 is transmitted, an error is produced in the sign bit $x_{15}$. If the correcting process based on the content of the sign bit $x_{15}$ is performed, the content of the data signal will become entirely different from the initial content.

This embodiment is constructed to enable to correct the error when the above error of the sign bit is produced. In this embodiment, in order to detect the error of the sign bit, which of "0" and "1" of the bit number is more in the bit codes forming the invalid data section and the sign bit is discriminated, a majority is employed, and the bit symbol having the higher bit number is discriminated as correct. Consequently, the bit symbol having the lower bit number is corrected.

The above correcting process becomes high correcting capacity when the code length of the invalid data section is longer. For example, when the second date Y is represented by Y=(0, 0) in the above example, the code length of the invalid data section is 9 bits, and when 5 of the 9 bits have errors, miscorrection is performed even if the majority is employed. In other words, only 4 bits correcting capacity is provided. However, when the probability $P_M$ of producing the above mis-correction is observed quantitatively, it becomes

$$P_M \simeq {}_9C_5 \times Pe^5(1-Pe)^4$$

where C represents the combination calculation, and Pe represents a bit error rate.

When the invalid bit number (including the sign bit) is odd, the above probability of producing the miscorrection becomes

$$P_M \simeq {}_LC_{(L+1)/2} \times Pe^{(L+1)/2}(1-Pe)^{(L-1)/2}$$

When the invalid bit number is even, if the bit numbers of "0" and "1" are equal, they cannot be corrected. Consequently, this case should be considered to be in case of error correction. The probability of producing the mis-correction is

$$P_M \simeq {}_LC_{L/2} \times Pe^{L/2}(1-Pe)^{L/2}$$

Fig. 17 shows a graph of the probability of producing the above-decribed mis-correction. In Fig. 17, the characteristics designated by a broken line shows the case of condition of $P_M$=Pe. As seen from Fig. 17, in case that the bit number is 2, the correcting effect cannot be expected, but when the bit number (L) is more than 3, even if the bit error rate Pe is worse like more than $10^{-2}$, it is understood that the correcting effect of more than one figure of the probability can be obtained. Particularly when the bit number is more than 9, the correcting effect of approx. 6 figures can be improved.

Fig. 18 shows third embodiment of a process for performing the error correction according to the above-described majority logic.

The received data signal is inputted to an input terminal 25. The first data X is inputted to a shift register 35, and the second data Y is inputted to a decoder 26. The decoder 26 analyzes the second data Y, identifies the valid data section in the first data X, and applies the information (bit data length of the invalid data section determined thereby) to a gate circuit 36 and a counter 28. Thus, the gate circuit 36 selects the invalid data section and the code of sign bit in the first data X stored in the shift register 35, and applies it to a majority logic circuit 37. In the majority logic circuit 37, the bit codes of the invalid data section are individually counted according to the symbols. For example, when the "1" in the bit code of the invalid data section is more than "0", the logic circuit 37 outputs "1", while when the "0" is more, it outputs "0". The counter 28 controls gate circuits 27 and 32 based on the analyzed information from the decoder 26 so that, when the valid data is transferred, the gate circuit 27 is ON, while the gate circuit 32 is OFF. The counter 28 controls so that, when the invalid data is transferred, the gate circuit 27 is OFF while the gate circuit 32 is ON. The counter 28 is operated synchronously with the shift register 35 by the clock CK.

As a result, the valid data transmitted in the first data X, invalid data substituted for a number of symbol bits and sign bit are presented at an output terminal 33. In this manner, the code error of the invalid data and sign bit can be corrected.

According to the system of the present invention as described above, the errors of the invalid data section and sign bit can be corrected without using the detecting codes shown in Figs. 1 and 2. As a result, when the detecting code is used to correct the error for the first data X, the error detecting and correcting capacities can be further improved, and the data finally obtained can become extremely accurate.

The above-described processor can be variously modified. For example, only the data of the invalid section can be stored in the shift register, and a majority logic process can be performed. Further, the second data Y has been transmitted by 1:1 relationship to the first data X in the previous embodiments. However, when the adjacent phase correlations are strong between sampled values like audio signal, a second data Y may be transmitted at every several frames. In this case, its redundancy becomes shorter. In addition, the data lengths of the first and second data X and Y sections can be selected in suitable length in response to the specification.

The present invention is not limited to the particular embodiments described above, but even when the present invention is applied to a system wherein an audio signal having large amplitude varying range is converted to a digital signal and transmitted, the advantages can be effectively performed.

Fig. 19 is a view showing the relationship between the input/output level and the quantization level of a linear coding system for explaining a fourth embodiment. According to the present invention, range information for identifying the input level by dividing the input level into several sections is utilized. This range information corresponds to the second data Y in the first to third embodiments. In this case, the second data Y was for identifying the valid data section and the invalid data section of the first data, but the range information means the special level range.

The example shown in Fig. 19 means that pieces of the range information (0)—(n) are divided by $2^n$ (n=0, 1, 2, 3, . . .) of the total input/output level range. Accordingly, there are (n+1) types of pieces of range information. In case of this embodiment, n=4, and 5 pieces of range information are provided. Thus, when a decoding of data is presented based on the range information at the receiving side, the range of the decoded data is limited to the level represented by the range information, and missed decoding can be completely suppressed.

Fig. 20 shows an example of a circuit for producing the above described range information.

A PCM audio signal is, for example, applied as a data signal to an input terminal 41. The data signal is input to a sampling delay circuit 42, and also inputted to a serial-parallel converter 43. The output of the converter 43 is input to a priority encoder 44. The encoder 44 detects the data representing the maximum level of the audio signal over a period of several times the sampling period. The range discrimination for the maximum level is performed, and the range information is generated from the encoder 44. The range information is latched to a latch circuit 45. The output of the latch circuit 45, that is range information is input to a parallel-serial converter 47 and a parallel-serial-converter 48. The converter 43, encoder 44 and latch circuit 45 construct a maximum level latch and range decision circuit 49. When the range information is input to the converter 48, a code error detecting code may be added to the corresponding range information by a check code adder 46.

Then, the output of the delay circuit 42 is input to a serial-parallel converter 50, the output of which is input to the parallel-serial converter 48. The converters 50 and 48 construct a multiplexer 51.

In this manner, the data signals of the sampling period of several times and the data representing the maximum level, i.e., the range information are stored in the converter 48. These data are serially read out and led through a delay circuit 52 to an output terminal 53.

Fig. 21 shows data signal 56 before processed by the processor at the transmitting side and data signal 57 after processed. Assume that the data 56 before processed totally has 14 bits. Data $x_{13}$ of these bits is a sign bit. Assume further that the maximum level of the signal is represented by the data of $x_0$—$x_{10}$. Thus, the data signal has the valid data section of $x_0$—$x_{10}$, $x_{13}$ and the invalid data section of $x_{11}$ and $x_{12}$. The maximum value of the data signal 56 is determined by the decision circuit 49, which generates the range information corresponding to the maximum value. The range information is, for example, represented by 3 bits, and input to the converter 48. On the other hand, the parallel data corresponding to the serial data is input from the converter 50 to the converter 48. Accordingly, the data signal 57 presented at the output terminal 53 is output as the signal including the range information $y_0$—$y_2$. In this case, the detecting code may be added to the range information $y_0$—$y_2$. Further, the detecting code may be added entirely to the data signal 57.

Fig. 22 shows a processor for processing the data signal 57 at the receiving side. The data signal 57 input from an input terminal 61 is inputted to a range data extraction circuit 62 and a serial-parallel converter 63. The range information detected by the extraction circuit 62 is input to an invalid data correcting circuit 65 and a parallel-serial converter 64. On the other hand, the parallel data from the converter 63 is input to the converter 64. The correcting circuit 65 analyzes the range information, thereby detecting that the invalid data section is the data $x_{11}$ and $x_{12}$. Accordingly, the invalid data in the converter 64 is, for example, forcibly corrected to "0". As a result, the data signal led from the converter 64 to an output terminal 66 is output as completed for the error correction of the invalid data section. The converter 63, converter 64 and correcting circuit 64 construct a so-called range limiter. When the detecting code is added to the range information, an error detecting and correcting circuit is provided at the rear state of the extraction circuit 62.

According to this embodiment as described above, the invalid data section is forcibly corrected to a predetermined code on the basis of the range information. Accordingly, even if an error is produced in the invalid data section in the course of transmission, this error can be corrected and an output data signal having no noise can be obtained.

Fig. 23 shows a fifth embodiment of the present invention. This embodiment is a processor utilized when audio signals of R-channel and L-channel in a stereophonic broadcasting are transmitted according to a linear coding system.

L-channel data signal is inputted to an input terminal 71L, and R-channel data signal is input to an input terminal 71R. Since the processors of the L-channel and R-channel are constructed symmetrically, the structure of the L-channel processor will be described.

In this embodiment, a sampling frequency is 48 kHz, and the maximum level in 48 sampling periods (1 ms) is latched. Range information is generated on the basis of the latched data.

The data signal is input from the input terminal 71L through sampling delay circuits 72L and 73L to a multiplexer 76. The data signal is also input to a maximum level latch and range decision circuit 74L. The range information output from the decision circuit 74L is input to a hamming circuit 75, in which a check code is added, and input to the multiplexer 76. Range information of R-channel side is added with a check code in the hamming circuit 75, and then input to the multiplexer 76. Further, the data signal at the R-channel side is also inputted through sampling delay circuits 72R and 73R to the multiplexer 76.

The maximum level latch and range decision circuits 74L and 74R are of the same structure as the circuit shown in Fig. 20, and the multiplexer 76 has a serial-parallel converter and a parallel-serial converter.

The data signal presented at the output terminal 77 of the above processor contains the range information, i.e., the second data. The range information is accordingly effectively activated at the receiving side.

The ranges of the above embodiment are set by $1/2^n$ (n=0, 1, 2, 3, . . .) of the entire input/output level ranges. When the range is thus divided, the lower the input/output levels become, the range is concentrated and the range width becomes narrow. The coding signal transmission according to this system is effective as the transmission of the audio signal from the following three reasons:

(1) The probability distribution of the instantaneous values of the audio signals is generally represented by the negative exponential distribution. In other words, the higher the signal level, the lower the probability of producing the signal. Consequently, it is preferred to increase the number of sections of the range in the range where the input/output level is low.

(2) When the audio signal is recorded, it is normally set to the peak margin of 20—30 dB. Thus, most of the signal levels are concentrated to the low level range.

(3) When the signal level is low, there are properties that the noise is not masked by the signal and readily detected in hearing sense.

From the above-described reasons, it is advantageous to finely set the dividing steps in the range where the signal level is low so as to reduce the noise.

Fig. 24 shows an example of a noise suppressing circuit, which effectively utilizes the range information. In Fig. 24, the transmitted data signal is input through an input terminal 81 to an error detecting and correcting circuit 82, which corrects an error or errors. The error correction is performed when the detecting code is added to the entire data signal. The output data signal of the circuit 82 is input to a range limiter 83 and a range data extraction circuit 84. The output range information of the circuit 84 is input to an error detecting and correcting circuit 85, which corrects code error(s) still present. This correction is performed when the detecting code is added to the range information. The range information which has undergone the error correction process is inputted to the range limiter 83. The limiter 83 performs the range limiting process of the data signal on the basis of the range information. As described with respect to Fig. 22, the range limiter 83 limits the maximum level of the data signal. The output of the limiter 83 is again corrected for the code error in an error detecting and correcting circuit 86, and led to an output terminal 87.

According to this embodiment as described above, there is a possibility of establishing the upper 1—8 bits when an error of the invalid data section is corrected on the basis of the range information. Accordingly, when the remaining lower bits of the output of the limiter 83 are corrected by the circuit 86, the error correcting effect can be further improved.

Fig. 25 shows the relationship between the input/output level and the quantization level and the range zones shown for explaining a sixth embodiment of the present invention.

In this embodiment, the dividing points of the respective range sections are set to equal division points n/S (n=1, 2, 3, . . .) (S is number of division). This method of dividing the range is particularly effective when the probability distribution of the instantaneous values of the signal level is not concentrated in the range where the signal level is low. For example, this is effective when the audio signal is already compressed at the stage of analog signal, the signal amplified in the low signal level is handled. This signal compression is performed particularly in the noise reduction effecting device for the analog signal. In case that a limiter is used when the audio signal is recorded, a mean signal level is high. When the mean signal level is high in this manner, the dividing points of the range are preferably distributed uniformly over the whole input/output level range.

Fig. 25 shows range sections ①—⑧ as described above. The range information corresponding to the range sections ①—⑧ is transmitted by 3-bit data.

Fig. 26 shows a processor at the receiving side for processing the data added with a detecting code to the above range information.

Data signal inputted to an input terminal 91 is applied to a range data extraction circuit 92, an upper 3-bit extraction circuit 93, an interpolation circuit 96 and an input terminal 97a of a switch circuit 97. The extraction circuit 92 extracts the range information, which is corrected for error(s) by an error detecting and correcting circuit 94. The corrected range information is inputted to one input terminal of a comparator 95. On the other hand, the output data from the extraction circuit 93 is applied to the other input terminal of the comparator 95.

Accordingly, the comparator 95 compares the data corresponding to the range information with the data from the extraction circuit 93. In other words, the comparator 95 decides whether the maximum value of the signal level falls within the range represented by the range information or not. If the maximum value of the signal level falls within the range represented by the range information, the output of the comparator 95, such as "0" sets the switch circuit 97 to the input terminal 97a side. In this case, the input data signal is outputted to an output terminal 98 as it is. However, if the maximum value of the signal level exceeds the range represented by the range information, the output of the comparator 95 such as "1" sets the switch circuit 97 to the input terminal 97b side. Thus, when the invalid data section is transferred, the output data of the interpolation circuit 96 is led to the output terminal 98. In other words, the output data of the circuit 96 is, for example, the same content as the sign bit, thereby forming the invalid data section of the output data signal. Accordingly, the output data signal is limited at the maximum level by a range limiter composed of the interpolation circuit 96, extraction circuit 93, comparator 95 and switch circuit 97. As a result, when the output data signal is recovered to the audio signal, the noise reducing effect can be obtained.

Fig. 27 shows the relationship between the input/output level and the quantization level and the range zones for explaining a seventh embodiment of the present invention.

In this embodiment, the dividing points of the respective range sections are set by the equal dividing points n/S of the entire input/output levels (n=1, 2, 3, . . .). Further, the dividing points are set as one range section between the points. In this manner, the range sections are represented in all combination between n/S and m/S (m=0, 1, 2, 3, . . .) (S is number of division). In this embodiment, the number S of division is S=4, and n=0—3, m=1—4, and then types of range sections are set.

In the fifth and sixth embodiments described above, when the signal level is high, the range of wide level range is employed, and the noise becomes relatively large when a code error is produced. However, in the seventh embodiment, even if the signal level is high, the range of narrow width can be used if the variation in the signal level is low. Accordingly, the error produced by the bit error can be limited to the narrow range width. Consequently, the noise is further reduced. The audio signal is frequently formed from the result that the harmonic component having high frequency and small amplitude is added to a fundamental wave having low frequency and large amplitude. Thus, the noise reducing effect of the audio signal can be further increased by using, as in this embodiment, the range sections divided in many quantity from the range as multirange.

Fig. 28 shows a processor at the receiving side for processing data signal containing range information of the range divided into sections as described above.

Data signal input to an input terminal 101 is input to a range data extraction circuit 102, an upper 3 bits extraction circuit 104, an interpolation circuit 108 and an input terminal 109a of a switch circuit 109. The extraction circuit 102 extracts the range information, which is error corrected by an error detecting and correcting circuit 103. In this case, the range information contains the maximum and minimum values of the set range. The first range representing the maximum value of the range is applied to one input terminal of an upper bit comparator 105, and the second range information representing the minimum value of the range is applied to one input terminal of a lower bit comparator 106. The output of the extraction circuit 104 is applied to the other input terminals of the comparators 105 and 106.

The comparator 105 decides whether the output data from the extraction circuit 104 is larger or smaller than the first range information representing the maximum value of the range. When the data from the extraction circuit 104 is larger than the first range information representing the maximum value of the range, the comparator 105 outputs, for example, a logic "1", which is applied through an OR circuit 107 to the control terminal of the switch circuit 109. Thus, the switch circuit 109 selects the input terminal 109b when the invalid data section of the data signal, i.e., the data except the bit representing the maximum level is transferred, and substitutes the data of the interpolation circuit 108 such as "0" for the invalid data section.

Then the comparator 106 decides whether the output data of the extraction circuit 104 is larger or smaller than the second range information representing the minimum value of the range. When the data from the extraction circuit 104 is smaller than the second range information representing the minimum value of the range, the comparator 106 outputs, for example, a logic "1", which is applied through the OR circuit 107 to the control terminal of the switch circuit 109. When the logic "1" is output from the comparator 106, the switch circuit 109 selects the input terminal 109b when the valid data section is transferred. In this case, data "1" is outputted from the circuit 108, and the data of the valid data section is supplemented so that the maximum range of the valid data section becomes a value between the minimum value and the maximum value of the range.

When the data from the extraction circuit 104 is smaller than the first range information representing the maximum value of the range and larger than the second range information representing the minimum value of the range, the outputs of the comparators 105 and 106 are logic "0", and the switch 109 selects the input terminal 109a. Accordingly, in this case, the data signal is led to the output terminal 110 as it is.

According to the above-described embodiment, the noise due to a bit error is limited to the upper and lower level ranges indicated by the range information, and the noise is effectively reduced. In this embodiment, the number of divisions of the range sections is increased, and the number of bits of the information is accordingly increased. However, this increase is only 1 or 2 bits, which is an extremely small value as compared with the number of the entire transmission bits.

According to this embodiment, even if the signal level is high, the noise can be limited to a narrow range if the variation in the signal during a predetermined period is small.

Figs. 29 and 30 show the relationship between the input/output levels and the quantization level and the range zones for explaining an eighth embodiment of the present invention.

This embodiment contemplates to reduce the noise due to a bit error by applying the present invention to a near-instantaneous companding coding system. The number of scales of the near-instantaneous cmpanding coding system is normally frequently 5 scales. However, in the respective scales, the range sections using the range information is not set, and noise reducing effect is not accordingly sufficient.

In this embodiment, the level range is divided, as shown in Fig. 30, for the minimum scale 4, and the ranges ⑤, ⑥ and ⑦ are set. Fig. 30 shows the enlarged portion of the scale 4 in Fig. 29. In this manner, when the range is set to the scale of the near-instantaneous companding coding system and the level is limited on the basis of the range information, the noise reducing effect can be further improved.

Fig. 31 shows a processor for processing at the receiving side the data signal containing the range information and scale information divided as described above.

Data signal inputted to an input terminal 111 is inputted to a near-instantaneous expander 112 and a scale and range data extraction circuit 114. The extraction circuit 114 extracts the above-described scale information and the range information, and inputs it to an error detecting and correcting circuit 115. The scale information and range information corrected for errors are input to a decoder 116. The decoder 116 analyzes the scale information and the range information, applies the decoded output for the scales 0—4 to the expander 112, and the decoded output for the ranges ⑤—⑦ to a range limiter 113. In this manner, the input data signal is expanded by the expander 112, and limited in the range by the limiter 113. In this embodiment, when the scale 4 is decided by the decoder 116, the range limitation is performed in the limiter 113. Accordingly, the output data signal presented at the output terminal 117 is further reduced in the noise as a compared with the signal obtained by the ordinary near-instantaneous companding coding system.

The above embodiment is an example, where the present invention is applied to the near-instantaneous companding coding system. However, the present invention may also be applied to the instantaneous companding coding system.

As described above, the present invention can provide a code correcting method capable of preferably improving the quality of the decoded output by remarkably improving the code error correcting capacity by a simple method.

**Claims**

1. A digital information transmitting system including means for obtaining a sqeuence of first data as digital information to be transmitted, means (42, 49, 51) for segmenting the first data into blocks during a predetermined period of time and for detecting range information, and means for transmitting said range information which is obtained at said detecting means to a transmitting side in a manner to be paired with a block, characterized in that said range information of said detecting means represents valid and invalid portions of the data within the block and represents data for use in an error correction of the invalid portion at a receiving side and said transmitting means transmits a signal with said range information attached to said block without being subjected to data compression.

2. A digital information transmitting system according to claim 1, characterized in that said first data are constituted by linearly coded data.

3. A digital information transmitting system according to claim 1, characterized in that said first data is constituted by an instantaneously-companding coded data.

4. A digital information transmitting system according to claim 1, characterized in that each block of said first data is constituted by data with a checking code attached thereto.

5. A digital information transmitting system according to claim 1, characterized in that each block of said first data includes a sign bit "0" or "1" at the most significant bit to identify a positive or negative of a value of said block.

6. A digital information transmitting system according to claim 2, characterized in that said first data is constituted by a quantized analog signal and said range information represents data showing points which are obtained by dividing a total input/output level range corresponding to a predetermined time period of an analog signal by

$$2^n \ (n: 0, 1, 2, 3, \ldots)$$

7. A digital information transmitting system according to claim 2, characterized in that said first data is constituted by a quantized analog signal and said range information is constituted by data representing points (n/s) (n: 0, 1, 2, 3, . . .) which are obtained by equally dividing by a number S a total input/output level range corresponding to a predetermined time period of said analog signal.

8. A digital information transmitting system according to claim 2, characterized in that said first data is constituted by a quantized analog signal and said range information is constituted by a combination of one data representing points (n/s) (n: 0, 1, 2, 3, . . .) which are obtained by equally dividing by a number S a total input/output level range corresponding to a predetermined period of the analog signal and one data representing points (m/s) (m: 0, 1, 2, . . .) which are obtained by equally dividing by a number S a total input/output level range corresponding to a period of the analog signal.

9. A digital information transmitting system according to claim 1, characterized in that said analog signal is constituted by an audio signal.

10. A digital information receiving apparatus for receiving digital information having range information showing whether or not a digital value within each block corresponding to a predetermined time period of first data in a sequence falls within a predetermined area range, characterized in that it includes means for receiving the first data which is not compressed, constituted by the block each corresponding to said predetermined time period and having valid and invalid portions and error correction means (26, 27, 28) for analyzing said range information added to the block and for correcting data of an invalid portion of the block associated with the range information to either one of all 0's and all 1's in accordance with a predetermined rule.

11. A digital information receiving apparatus according to claim 10, characterized in that said error correction means further includes means (29) which, subsequent to correcting said invalid portion to all 0's or all 1's in accordance with said predetermined rule, corrects an error of said valid portion in accordance with a check code.

12. A digital information receiving apparatus according to claim 10, characterized in that said first data is constituted by linearly-coded data.

13. A digital information receiving apparatus according to claim 10, characterized in that said first data is constituted by instantaneously-companding coded data.

14. A digital information receiving apparatus according to claim 12, characterized in that said first data is constituted by a linearly-coded analog signal, said range information is constituted by data representing points which are obtained by dividing a total input/output level range corresponding to a predetermined time period by $2^n$ (n: 0, 1, 2, 3, . . .), and said apparatus further includes level limiting means (83) which, in order to suppress a noise of an output analog signal resulting from a coded error, limits an output level of data corresponding to said analog signal on the basis of a result of analysis of said range information coming from said error correction means (82).

15. A digital information receiving apparatus according to claim 12, characterized in that said first data is constituted by linearly-coded data, said range information is constituted by data representing points (n/s) (n: 0, 1, 2, 3, . . .) which are obtained by equally dividing by a number S a total input/output level range corresponding to a predetermined time period of said analog signal and said digital information receiving apparatus limits an output amplitude level of an output analog signal and is of a type which, in order to suppress a noise of said output analog signal resulting from a code error, limits an output level of data corresponding to said analog signal as a result of analysis of said range information coming from said error correction means.

16. A digital information receiving apparatus according to claim 12, characterized in that said first data is constituted by a quantized replica of an analog signal, said range information is constituted by a combination of one data representing points (n/s) (n: 0, 1, 2, 3, . . .) which are obtained by equally dividing by a number S a total input/output level range corresponding to a time period of said analog signal and one data representing points (m/s) (m: 0, 1, 2, 3, . . .) which are obtained by equally dividing by a number S a total input/output level range corresponding to a predetermined time period of said analog signal, and the apparatus further includes a level limiting (83) means adopted to limit an output amplitude level of an output analog signal and being of such a type that, in order to suppress a noise of said output signal resulting from a code error, limits an output level of data corresponding to the analog signal as a result of analysis of said range information coming from said error correction means (82).

17. A digital information receiving apparatus according to claim 10, characterized in that said analog signal is constituted of an audio signal.

18. A digital information receiving apparatus according to claim 10, characterized in that each block of said first data includes a sign bit at the most significant bit and said error correction means detects said sign bit and corrects all bits of said invalid portion such that they become the same contents as that of the sign bit.

19. A digital information receiving apparatus according to claim 10, characterized in that said error correction mean is of such a type as to correct those bits of said invalid portion of each block to all "0" bits or all "1" bits on the basis of a result of a majority rule which is taken against those bits in the invalid portion of the block of said first data.

20. A digital information receiving apparatus according to claim 18, characterized in that said error correcting means identifies positive or negative of said first data with 0 or 1 by the most significant bit of said first data.

**Patentansprüche**

1. Übertragungssystem für Digitalinformation, umfassend eine Einrichtung zum Erhalt einer Folge erster Daten als die zu übertragende Digitalinformation, eine Einrichtung (42, 49, 51) zur Segmentierung der ersten Daten in Blöcke während einer vorbestimmten Zeitspanne und zur Erfassung von Bereichsinformation, sowie eine Einrichtung zur Übertragung der Bereichsinformation, die von der Erfassungseinrichtung erhalten wird, an eine Sendestelle, und zwar paarweise mit einem Block, dadurch gekennzeichnet, daß die Bereichsinformation der Erfassungseinrichtung gültige und ungültige Abschnitte der Daten innerhalb des Blocks repräsentiert und Daten zur Verwendung bei einer Fehlerkorrektur des ungültigen Abschnitts an einer Empfangsstelle repräsentiert, und daß die Sendestelle ein Signal überträgt, bei dem die Bereichsinformation an den Block angefügt ist, ohne einer Datenkompression ausgesetzt zu sein.

2. Übertragungssystem nach Anspruch 1, dadurch gekennzeichnet, daß die ersten Daten linear codierte Daten sind.

3. Übertragungssystem nach Anspruch 1, dadurch gekennzeichnet, daß die ersten Daten momentankompandiert codierte Daten sind.

4. Übertragungssystem nach Anspruch 1, dadurch gekennzeichnet, daß jeder Block der ersten Daten aus Daten mit einem angefügten Prüfcode aufgebaut ist.

5. Übertragungssystem nach Anspruch 1, dadurch gekennzeichnet, daß jeder Block der ersten Daten ein Vorzeichenbit "0" oder "1" an der Stelle des höchstwertigen Bits zur Identifizierung eines positiven oder negativen Werts des Blocks enthält.

6. Übertragungssystem nach Anspruch 2, dadurch gekennzeichnet, daß die ersten Daten von einem quantisierten Analogsignal gebildet sind und die Bereichsinformation Daten repräsentiert, die Punkte zeigen, die durch Teilen eines Gesamteingangs/ausgangs-Pegelbereichs entsprechend einer vorbestimmten Zeitspanne eines Analogsignals durch $2^n$ (n: 0, 1, 2, 3, ...) erhalten werden.

7. Übertragungssystem nach Anspruch 2, dadurch gekennzeichnet, daß die ersten Daten von einem quantisierten Analogsignal gebildet werden und die Bereichsinformation von Daten gebildet wird, die Punkte (n/s) (n: 0, 1, 2, 3, ...) repräsentieren, die erhalten werden durch gleichmäßiges Teilen eines Gesamteingangs/ausgangs-Pegelbereichs entsprechend einer vorbestimmten Zeitspanne des Analogsignals durch eine Zahl S.

8. Übertragungssystem nach Anspruch 2, dadurch gekennzeichnet, daß die ersten Daten von einem quantisierten Analogsignal dargestellt werden und die Bereichsinformation dargestellt wird von einer Kombination eines Datums, das Punkte (n/s) (n: 0, 1, 2, 3, ...) repräsentiert, die erhalten werden durch gleichmäßiges Teilen eines Gesamteingangs/ausgangs-Pegelbereichs entsprechend einer vorbestimmten Periode des Analogsignals durch eine Zahl S, und eines Datums, das Punkte (m/s) (m: 0, 1, 2, 3, ...) repräsentiert, die erhalten werden durch gleichmäßiges Teilen eines Gesamteingangs/ausgangs-Pegelbereichs entsprechend einer Periode des Analogsignals durch eine Zahl S.

9. Übertragungssystem nach Anspruch 1, dadurch gekennzeichnet, daß das Analogsignal ein Audiosignal ist.

10. Empfangsgerät für Digitalinformation zum Empfang von Digitalinformation, die eine Bereichsinformation enthaTlt, die zeigt, ob ein Digitalwert innerhalb jedes Blocks, der einer vorbestimmten Zeitspanne der ersten Daten in einer Folge entspricht, in einen vorbestimmten Zonenbereich fällt, dadurch gekennzeichnet, daß sie eine Einrichtung zum Empfang der ersten Daten, die nicht komprimiert sind und von dem Block dargestellt werden, die jeweils der vorbestimmten Zeitspanne entsprechend und gültige und ungültige Abschnitte aufweisen, eine Fehlerkorrektureinrichtung (26, 27, 28) zur Analysierung der Bereichsinformation, die dem Block zugefügt ist, und zur Korrektur von Daten eines ungültigen Abschnitts des Blocks, der der Bereichsinformation zugeordnet ist auf entweder alle 0 oder alle 1 nach Maßgabe einer vorgegebenen Regel.

11. Empfangsgerät nach Anspruch 10, dadurch gekennzeichnet, daß die Fehlerkorrektureinrichtung ferner eine Einrichtung (29) enthält, die folgend auf die Korrektur des ungültigen Abschnitts auf entweder alle 0 oder alle 1 nach Maßgabe der vorbestimmten Regel, einen Fehler des gültigen Abschnitts nach Maßgabe eines Prüfcodes korrigiert.

12. Empfangsgerät nach Anspruch 10, dadurch gekennzeichnet, daß die ersten Daten linear codierte Daten sind.

13. Empfangsgerät nach Anspruch 10, dadurch gekennzeichnet, daß die ersten Daten momentankompandiert codierte Daten sind.

14. Empfangsgerät nach Anspruch 12, dadurch gekennzeichnet, daß die ersten Daten von einem linear codierten Analogsignal gebildet werden und die Bereichsinformation von Daten gebildet wird, die Punkte repräsentieren, die durch Teilen eines Gesamteingangs/ausgangs-Pegelbereichs entsprechend einer vorbestimmten Zeitspanne durch $2^n$ (n: 0, 1, 2, 3, ...) erhalten werden, und daß das Gerät ferner eine Pegelbegrenzungseinrichtung (83) enthält, die zur Unterdrückung einer Störung eines Ausgangsanalogsignals, die von einem Codierfehler herrührt, einen Ausgangswert der dem Analogsignal entsprechenden Daten auf der basis des Ergebnisses einer Analyse der Bereichsinformation begrenzt, die von der Fehlerkorrektureinrichtung (82) kommt.

15. Empfangsgerät nach Anspruch 12, dadurch gekennzeichnet, daß die ersten Daten von linear codierten Daten gebildet werden, daß die Bereichsinformation von Daten gebildet wird, die Punkte (n/s) (n: 0, 1, 2, 3, ...) repräsentieren, die erhalten werden durch gleichmäßiges Teilen eines Gesamteingangs/ausgangs-Pegelbereichs entsprechend einer vorbestimmten Zeitspanne des Analogsignals durch eine Zahl S, und daß das Empfangsgerät einen Ausgangsamplitudenpegel eines Ausgangsanalogsignals begrenzt und von einer solchen Art ist, daß zur Unterdrückung einer Störung des Ausgangsanalogsignals, die von einem Codefehler herrührt, der Ausgangswert von Daten, die dem Analogsignal entsprechen, als Ergebnis einer Analyse der Bereichsinformation, die von der Fehlerkorrektureinrichtung kommt, begrenzt wird.

16. Empfangsgerät nach Anspruch 12, dadurch gekennzeichnet, daß die ersten Daten von einee quantisierten Kopie eines Analogsignals gebildet werden, daß die Bereichsinformation von einer Kombination eines Datums, das Punkte (n/s) (n: 0, 1, 2, 3, ...) repräsentiert die erhalten werden durch gleichmäßiges Teilen eines Gesamteingangs/ausgangs-Pegelbereichs entsprechend einer Zeitspanne des Analogsignals durch eine Zahl S, und eines Datums, das Punkte (m/s) (m: 0, 1, 2, 3, ...) repräsentiert, die erhalten werden durch gleichmäßiges Teilen eines Gesamteingangs/ausgangs-Pegelbereichs entsprechend einer vorbestimmten Zeitspanne des Analogsignals durch eine Zahl S, und daß das Gerät ferner eine Pegelbegrenzungseinrichtung (83) zur Begrenzung eines Ausgangsamplitudenpegels eines Ausgangsanalogsignals enthält, und von einer solchen Art ist, daß zur Unterdrückung einer Störung des Ausgangssignals, die von einem Codefehler herrührt, ein Ausgangswert von Daten, die dem Analogsignal entsprechen, als Folge einer Analyse der Bereichsinformation, die von der Fehlerkorrektureinrichtung (82) kommt, begrenzt wird.

17. Empfangsgerät nach Anspruch 10, dadurch gekennzeichnet, daß das Analogsignal ein Audiosignal ist.

18. Empfangsgerät nach Anspruch 10, dadurch gekennzeichnet, daß jeder Block der ersten Daten ein Vorzeichenbit an der Stelle des höchstwertigen Bits aufweist, und daß die Fehlerkorrektureinrichtung das Vorzeichenbit erfaßt und alle Bits des ungültigen Abschnitts so korrigiert, daß sie denselben Inhalt wie das Vorzeichenbit haben.

19. Empfangsgerät nach Anspruch 10, dadurch gekennzeichnet, daß die Fehlerkorrektureinrichtung von einer solchen Art ist, daß sie jene Bits des ungültigen Abschnitts jedes Blocks auf entweder alle Bits "0" oder alle Bits "1" korrigiert, und zwar auf der Basis des Ergebnisses einer Mehrheitsregel, die auf die Bits des ungültigen Abschnitts des Blocks der ersten Daten angewendet wird.

20. Empfangsgerät nach Anspruch 18, dadurch gekennzeichnet, daß die Fehlerkorrektureinrichtung positive oder negative erste Daten mit einer 0 oder 1 an dem höchstwertigen Bit der ersten Daten identifiziert.

**Revendications**

1. Un système d'émission d'information numérique comprenant des moyens pour obtenir une séquence de premières données à titre d'information numérique à émettre, des moyens (42, 49, 51) pour segmenter les premières données en blocs pendant une période prédéterminée, et pour détecter une information de plage, et des moyens pour émettre vers un côté émetteur l'information de plage qui est obtenue dans les moyens de détection, de manière à l'associer à un bloc pour former une paire, caractérisé en ce que l'information de plage des moyens de détection représente des parties valide et invalide des données dans le bloc, et représente des données à utiliser dans une correction d'erreur de la partie invalide, dans un côté récepteur, et les moyens d'émission émettent un signal dans lequel l'information de plage est associée au bloc précité, sans qu'une compression de données ne soit appliquée à ce signal.

2. Un système d'émission d'information numérique selon la revendication 1, caractérisé en ce que les premières données sont constituées par des données codées de façon linéaire.

3. Un système d'émission d'information numérique selon la revendication 1, caractérisé en ce que les premières données sont constituées par des données codées avec compression-extension instantanée.

4. Un système d'émission d'information numérique selon la revendication 1, caractérisé en ce que chaque bloc des premières données est constitué par des données auxquelles est associé un code de contrôle.

5. Un système d'émission d'information numérique selon la revendication 1, caractérisé en ce que chaque bloc des premières données comprend un bit de signe "0" ou "1" pour le bit de plus fort poids, dans le but d'identifier le signe positif ou négatif d'une valeur du bloc.

6. Un système d'émission d'information numérique selon la revendication 2, caractérisé en ce que les premières données sont constituées par un signal analogique quantifié et l'information de plage représente des données indiquant des points qui sont obtenus en divisant par $2^n$ (n: 0, 1, 2, 3, . . .) une plage globale de niveaux d'entrée/sortie, correspondant à une période prédéterminée d'un signal analogique.

7. Un système d'émission d'information numérique selon la revendication 2, caractérisé en ce que les premières données sont constituées par un signal analogique quantifié, et l'information de plage est constituée par des données représentant des points (n/s) (n: 0, 1, 2, 3, . . .) qui sont obtenus en divisant de façon égale par un nombre S une plage globale de niveaux d'entrée/sortie, correspondant à une période prédéterminée du signal analogique.

8. Un système d'émission d'information numérique selon la revendication 2, caractérisé en ce que les premières données sont constituées par un signal analogique quantifié, et l'information de plage est constituée par une combinaison d'une donnée représentant des points (n/s) (n: 0, 1, 2, 3, . . .) qui sont obtenus en divisant de façon égale par un nombre S une plage globale de niveaux d'entrée/sortie correspondant à une période prédéterminée du signal analogique, et une donnée représentant des points (m/s) (m: 0, 1, 2, . . .) qui sont obtenus en divisant de façon égale par un nombre S une plage globale de niveaux d'entrée/sortie correspondant à une période du signal analogique.

9. Un système d'émission d'information numérique selon la revendication 1, caractérisé en ce que le signal analogique est constitué par un signal audio.

10. Un appareil de réception d'information numérique, prévu pour recevoir une information numérique qui contient une information de plage indiquant si une valeur numérique dans chaque bloc correspondant à une période prédéterminée de premières données dans une séquence, tombe ou non dans une plage d'étendue prédéterminée, caractérisé en ce qu'il comprend des moyens pour recevoir les premières données qui ne sont pas comprimées, qui sont constituées par le bloc précité, chaque bloc correspondant à la période prédéterminé, et qui comportent des parties valide et invalide, et des moyens de correction d'erreur (26, 27, 28) pour analyser l'information de plage qui est ajoutée au bloc, et pour corriger des données d'une partie invalide du bloc associé à l'information de plage, pour produire soit des données ne comprenant que des 0, soit des données ne comprenant que des 1, conformément à une règle prédéterminée.

11. Un appareil de réception d'information numérique selon la revendication 10, caractérisé en ce que les moyens de correction d'erreur comprennent en outre des moyens (29) qui, à la suite de la correction de la partie invalide pour produire des données ne comprenant que des 0 ou ne comprenant que des 1, conformément à la règle prédéterminée, corrigent une erreur de la partie valide conformément à un code de contrôle.

12. Un appareil de réception d'information numérique selon la revendication 10, caractérisé en ce que les premières données sont constituées par des données codées de façon linéaire.

13. Un appareil de réception d'information selon la revendication 10, caractérisé en ce que les premières données sont constituées par des données codées avec compression-extension instantanée.

14. Un appareil de réception d'information numérique selon la revendication 12, caractérisé en ce que les premières données sont constituées par un signal analogique codé de façon linéaire, l'information de plage est constituée par des données représentant des points qui sont obtenus en divisant par $2^n$ (n: 0, 1, 2, 3, . . .) la plage globale de niveaux d'entrée/sortie correspondant à une période prédéterminée, et cet appareil comprend en outre des moyens de limitation de niveau (83) qui, dans le but d'atténuer un bruit d'un signal analogique de sortie qui résulte d'une erreur de code, limitent le niveau de sortie de données correspondant au signal analogique, sur la base du résultat d'une analyse de l'information de plage qui provient des moyens de correction d'erreur (82).

15. Un appareil de réception d'information numérique selon la revendication 12, caractérisé en ce que les premières données sont constituées par des données codées de façon linéaire, l'information de plage est constituée par des données représentant des points (n/s) (n: 0, 1, 2, 3, . . .) qui sont obtenus en divisant de façon égale par un nombre S une plage globale de niveaux d'entrée/sortie, correspondant à une période prédéterminée du signal analogique, et l'appareil de réception d'information numérique limite un niveau d'amplitude d'un signal analogique de sortie, et il est d'un type qui, dans le but d'atténuer un bruit du signal analogique de sortie résultant d'une erreur de code, limite un niveau de sortie de données correspondant au signal analogique, sous l'effet de l'analyse de l'information de plage qui provient des moyens de correction d'erreur.

16. Un appareil de réception d'information numérique selon la revendication 12, caractérisé en ce que les premières données sont constituées par une version quantifiée d'un signal analogique, l'information de plage est constituée par une combinaison d'une donnée représentant des points (n/s) (n: 0, 1, 2, 3, . . .) qui sont obtenus en divisant de façon égale par un nombre S une plage globale de niveaux d'entrée/sortie correspondant à une période du signal analogique, et une donnée représentant des points (m/s) (m: 0, 1, 2, 3, . . .) qui sont obtenus en divisant de façon égale par un nombre S une plage globale de niveaux d'entrée/sortie correspondant à une période prédéterminée du signal analogique, et l'appareil comprend en outre des moyens de limitation de niveau (83) qui sont conçus pour limiter un niveau d'amplitude de sortie d'un signal analogique de sortie, et qui sont d'un type qui, dans le but d'atténuer un bruit du signal de sortie résultant d'une erreur de code, limite le niveau de sortie de données correspondant au signal analogique, sous l'effet de l'analyse de l'information de plage provenant des moyens de correction d'erreur (82).

17. Un appareil de réception d'information numérique selon la revendication 10, caractérisé en ce que le signal analogique est constitué par un signal audio.

18. Un appareil de réception d'information numérique selon la revendication 10, caractérisé en ce que chaque bloc des premières données comprend un bit de signe pour le bit de plus fort poids, et les moyens de correction d'erreur détectent ce bit de signe et ils corrigent tous les bits de la partie invalide de façon à leur donner une valeur égale à celle du bit de signe.

19. Un appareil de réception d'information numérique selon la revendication 10, caractérisé en ce que les moyens de correction d'erreur sont d'un type conçu de façon à corriger les bits de la partie invalide de chaque bloc pour tous les transformer en bits "0" ou tous les transformer en bits "1", sur la base du résultat d'une décision majoritaire qui est appliquée aux bits contenus dans la partie invalide du bloc des premières données.

20. Un appareil de réception d'information numérique selon la revendication 18, caractérisé en ce que les moyens de correction d'erreur identifient la valeur positive ou négative des premières données par une valeur 0 ou 1 du bit de plus fort poids des premières données.

FIG. 1

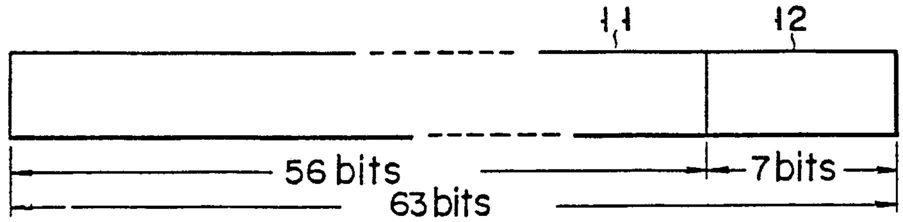


FIG. 2

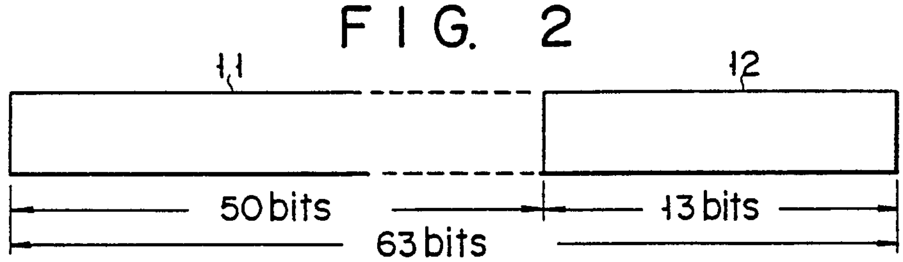


FIG. 3

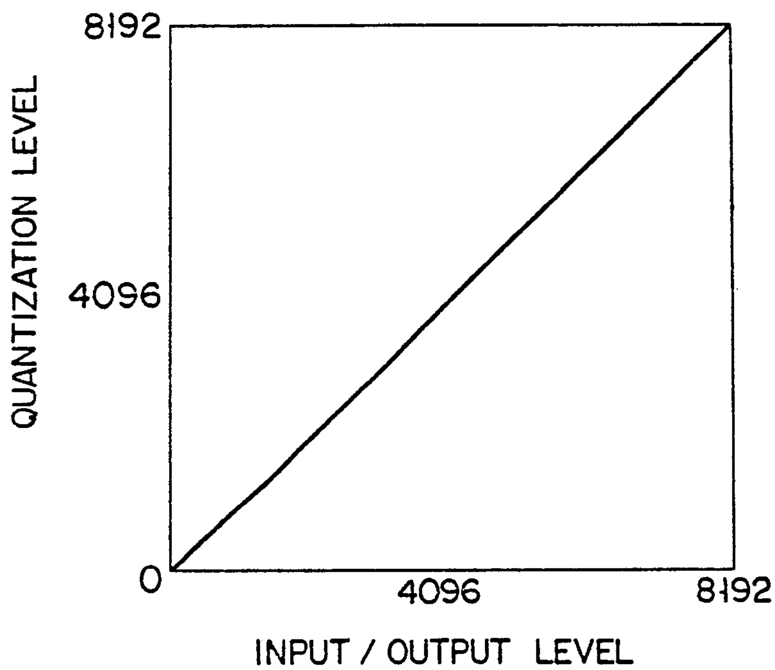

FIG. 4

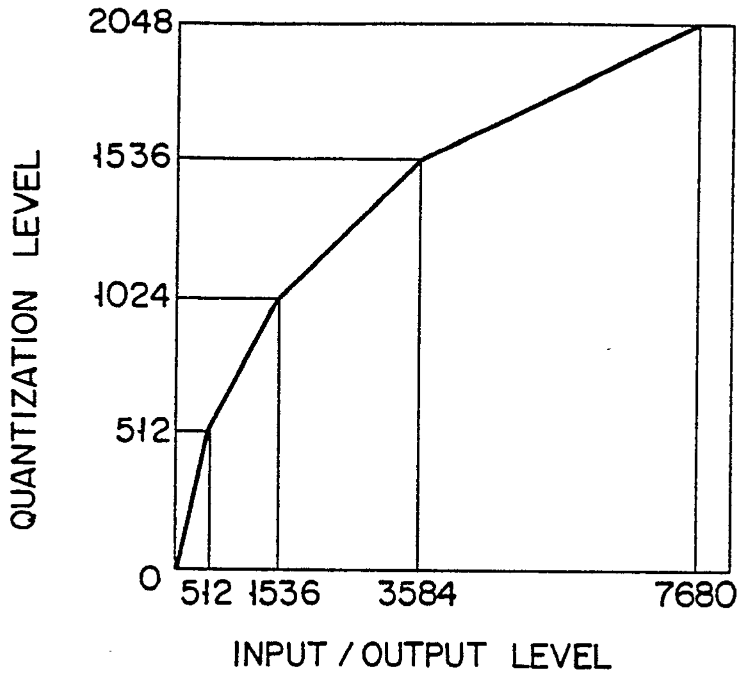
2048
1536
1024
512
0
512
1536
3584
7680
QUANTIZATION LEVEL
INPUT / OUTPUT LEVEL

FIG. 5

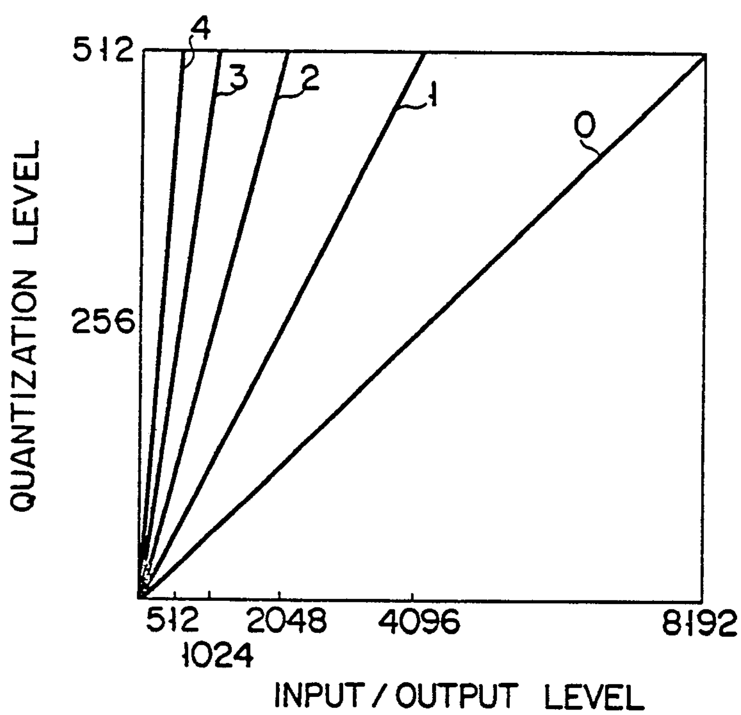
512
256
4
3
2
1
0
512
1024
2048
4096
8192
QUANTIZATION LEVEL
INPUT / OUTPUT LEVEL

FIG. 6

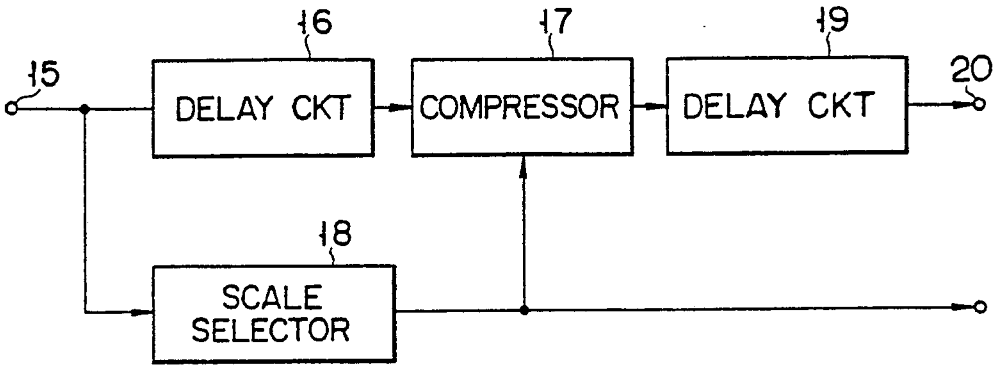
15
16
DELAY CKT
17
COMPRESSOR
19
DELAY CKT
20
18
SCALE
SELECTOR

FIG. 7

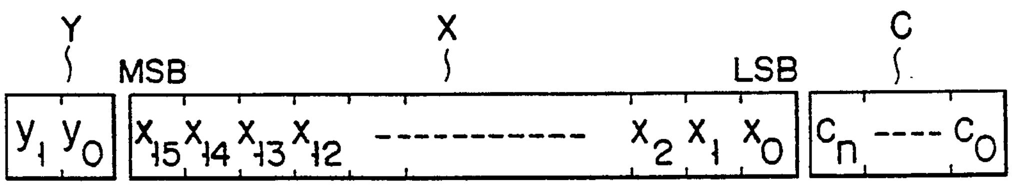
Y
X
C
MSB
LSB
y1 y0
x15 x14 x13 x12 ------------ x2 x1 x0
cn ---- c0

F I G. 8

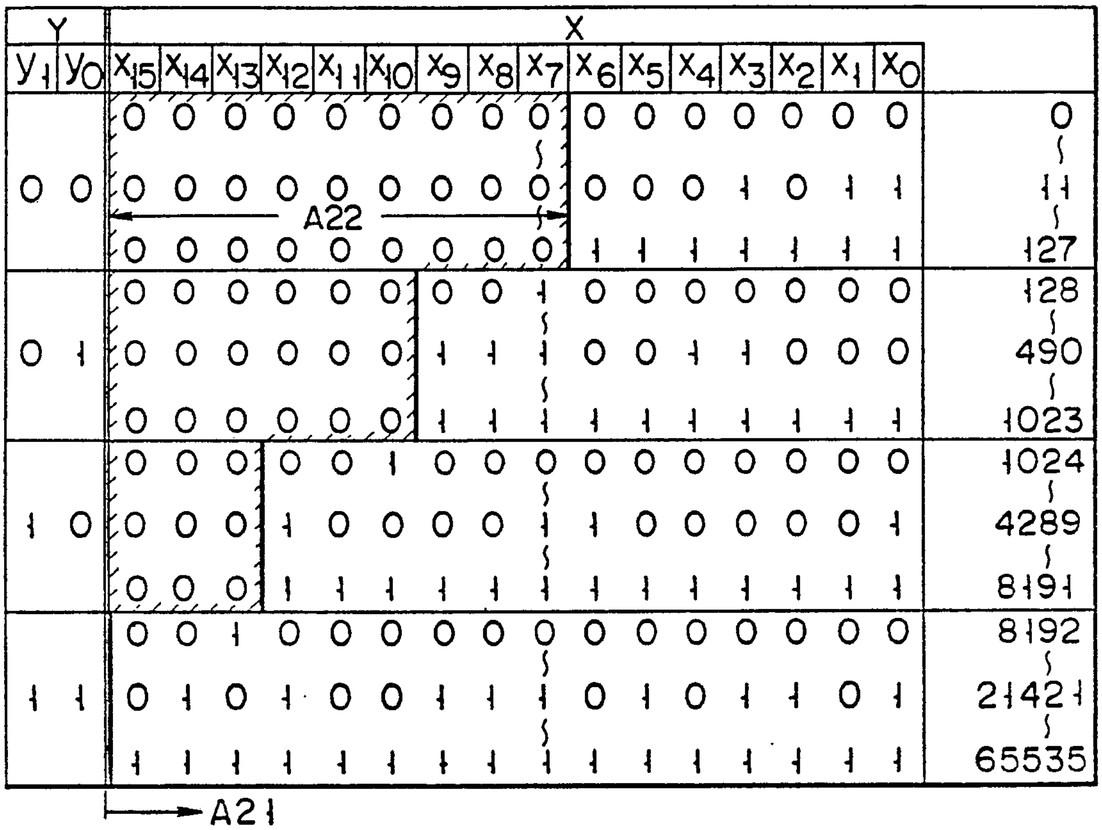


F I G. 9

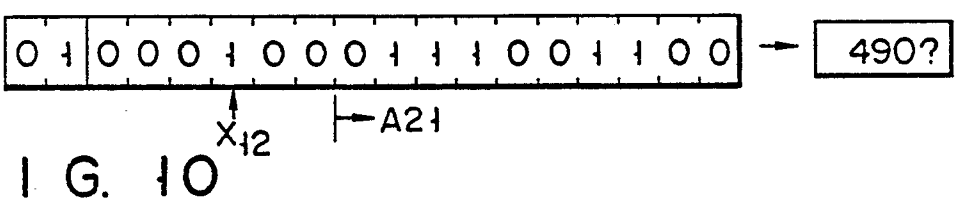


F I G. 10

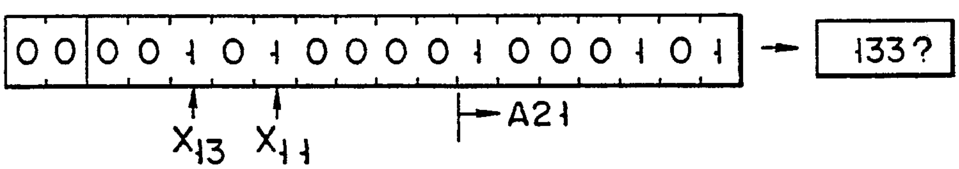

FIG. 11

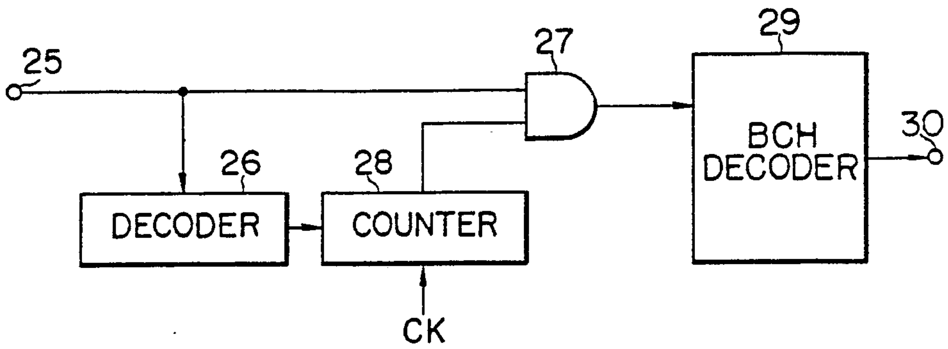
25
27
29
26
28
DECODER
COUNTER
BCH DECODER
30
CK

FIG. 13

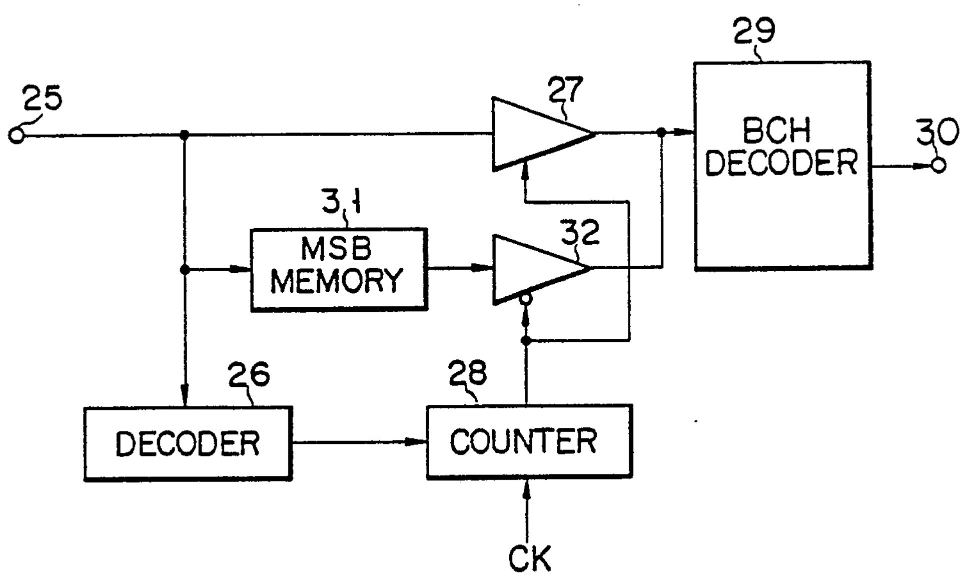
25
27
29
BCH DECODER
30
31
MSB MEMORY
32
26
28
DECODER
COUNTER
CK

# F I G. 12

| Y: $y_1$ | Y: $y_0$ | X: $x_{15}$ | $x_{14}$ | $x_{13}$ | $x_{12}$ | $x_{11}$ | $x_{10}$ | $x_9$ | $x_8$ | $x_7$ | $x_6$ | $x_5$ | $x_4$ | $x_3$ | $x_2$ | $x_1$ | $x_0$ | |
|---|---|---|---|---|---|---|---|---|---|---|---|---|---|---|---|---|---|---|
| | | 0 | 1 | 1 | 1 | 1 | 1 | 1 | 1 | 1 | 1 | 1 | 1 | 1 | 1 | 1 | 1 | 32767 |
| 1 | 1 | 0 | 1 | 0 | 1 | 0 | 0 | 1 | 1 | 1 | 0 | 1 | 0 | 1 | 1 | 0 | 1 | 21421 |
| | | 0 | 0 | 1 | 0 | 0 | 0 | 0 | 0 | 0 | 0 | 0 | 0 | 0 | 0 | 0 | 0 | 8192 |
| | | 0 | 0 | 0 | 1 | 1 | 1 | 1 | 1 | 1 | 1 | 1 | 1 | 1 | 1 | 1 | 1 | 8191 |
| 1 | 0 | 0 | 0 | 0 | 1 | 0 | 0 | 0 | 0 | 1 | 1 | 0 | 0 | 0 | 0 | 0 | 1 | 4289 |
| | | 0 | 0 | 0 | 0 | 0 | 1 | 0 | 0 | 0 | 0 | 0 | 0 | 0 | 0 | 0 | 0 | 1024 |
| | | 0 | 0 | 0 | 0 | 0 | 0 | 1 | 1 | 1 | 1 | 1 | 1 | 1 | 1 | 1 | 1 | 1023 |
| 0 | 1 | 0 | 0 | 0 | 0 | 0 | 0 | 0 | 1 | 1 | 1 | 0 | 0 | 1 | 1 | 0 | 0 | 490 |
| | | 0 | 0 | 0 | 0 | 0 | 0 | 0 | 0 | 1 | 0 | 0 | 0 | 0 | 0 | 0 | 0 | 128 |
| | | 0 | 0 | 0 | 0 | 0 | 0 | 0 | 0 | 0 | 1 | 1 | 1 | 1 | 1 | 1 | 1 | 127 |
| | | 0 | 0 | 0 | 0 | 0 | 0 | 0 | 0 | 0 | 0 | 0 | 0 | 1 | 0 | 1 | 1 | 11 |
| | | 0 | 0 | 0 | 0 | 0 | 0 | 0 | 0 | 0 | 0 | 0 | 0 | 0 | 0 | 0 | 1 | 1 |
| 0 | 0 | 0 | 0 | 0 | 0 | 0 | 0 | 0 | 0 | 0 | 0 | 0 | 0 | 0 | 0 | 0 | 0 | 0 |
| | | 1 | 1 | 1 | 1 | 1 | 1 | 1 | 1 | 1 | 1 | 1 | 1 | 1 | 1 | 1 | 1 | -1 |
| | | 1 | 1 | 1 | 1 | 1 | 1 | 1 | 1 | 1 | 1 | 1 | 1 | 0 | 1 | 0 | 1 | -11 |
| | | 1 | 1 | 1 | 1 | 1 | 1 | 1 | 1 | 1 | 1 | 0 | 0 | 0 | 0 | 0 | 0 | -128 |
| | | 1 | 1 | 1 | 1 | 1 | 1 | 1 | 1 | 0 | 1 | 1 | 1 | 1 | 1 | 1 | 1 | -129 |
| 0 | 1 | 1 | 1 | 1 | 1 | 1 | 1 | 1 | 0 | 0 | 0 | 1 | 1 | 0 | 1 | 0 | 0 | -490 |
| | | 1 | 1 | 1 | 1 | 1 | 1 | 0 | 0 | 0 | 0 | 0 | 0 | 0 | 0 | 0 | 0 | -1024 |
| | | 1 | 1 | 1 | 1 | 1 | 0 | 1 | 1 | 1 | 1 | 1 | 1 | 1 | 1 | 1 | 1 | -1025 |
| 1 | 0 | 1 | 1 | 1 | 0 | 1 | 1 | 1 | 1 | 0 | 0 | 1 | 1 | 1 | 1 | 1 | 1 | -4289 |
| | | 1 | 1 | 1 | 0 | 0 | 0 | 0 | 0 | 0 | 0 | 0 | 0 | 0 | 0 | 0 | 0 | -8192 |
| | | 1 | 1 | 0 | 1 | 1 | 1 | 1 | 1 | 1 | 1 | 1 | 1 | 1 | 1 | 1 | 1 | -8193 |
| 1 | 1 | 1 | 0 | 1 | 0 | 1 | 1 | 0 | 0 | 0 | 1 | 0 | 1 | 0 | 0 | 1 | 1 | -21421 |
| | | 1 | 0 | 0 | 0 | 0 | 0 | 0 | 0 | 0 | 0 | 0 | 0 | 0 | 0 | 0 | 0 | -32768 |

A22 ($x_{14}$–$x_7$)

A21 ($x_{14}$–$x_0$)

FIG. 14

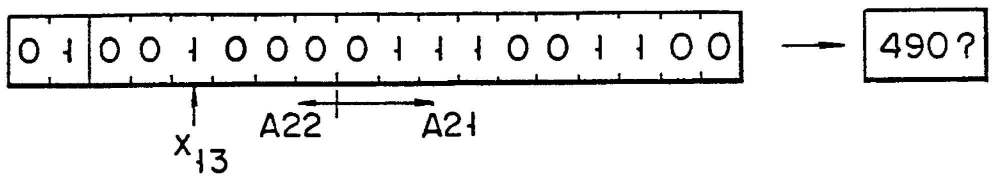


FIG. 15

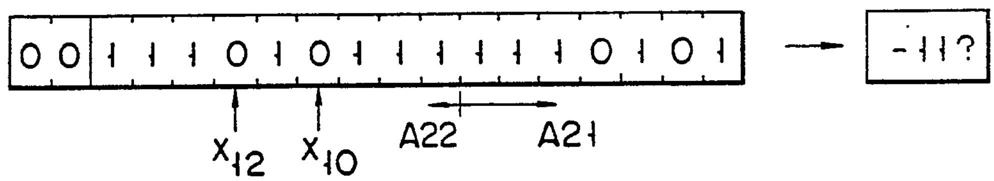


FIG. 16

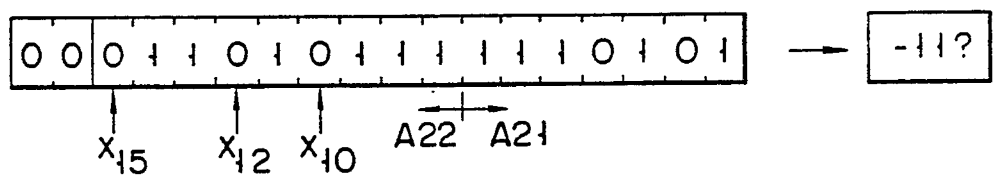


FIG. 17

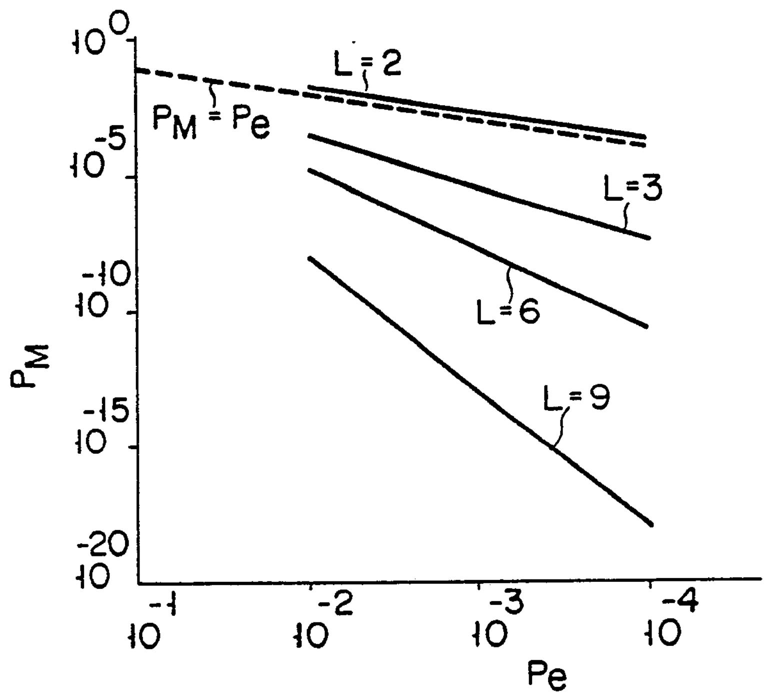

FIG. 18

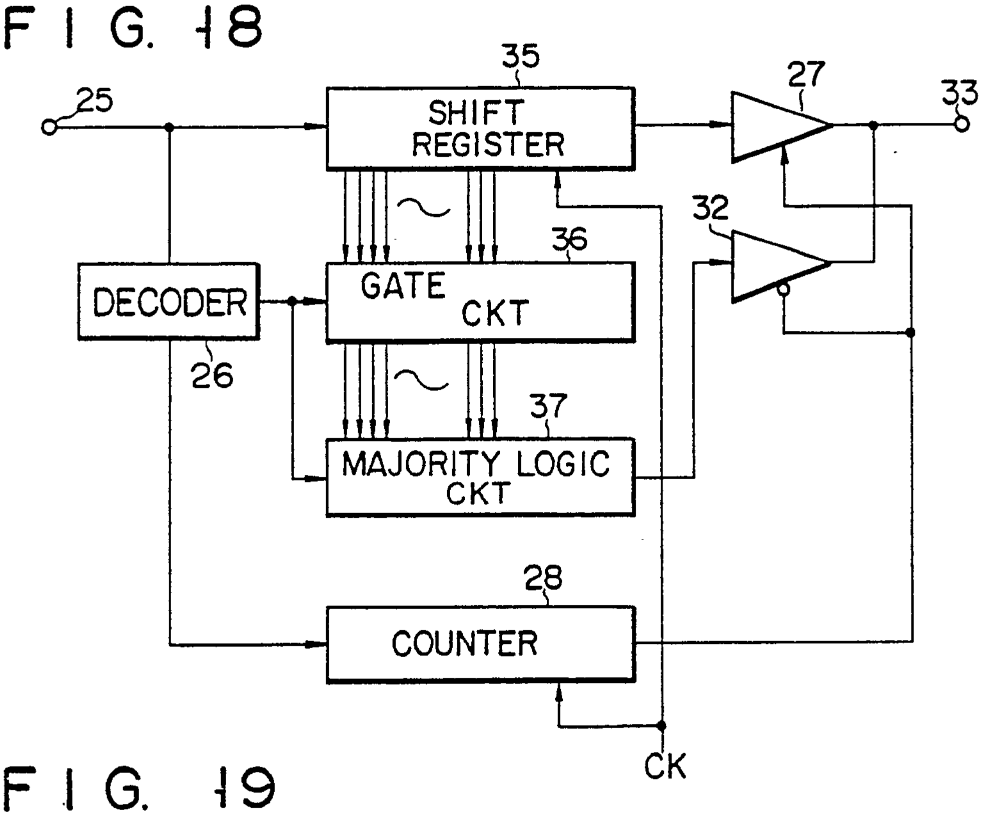
25
35
SHIFT REGISTER
27
33
32
36
DECODER
GATE CKT
26
37
MAJORITY LOGIC CKT
28
COUNTER
CK

FIG. 19

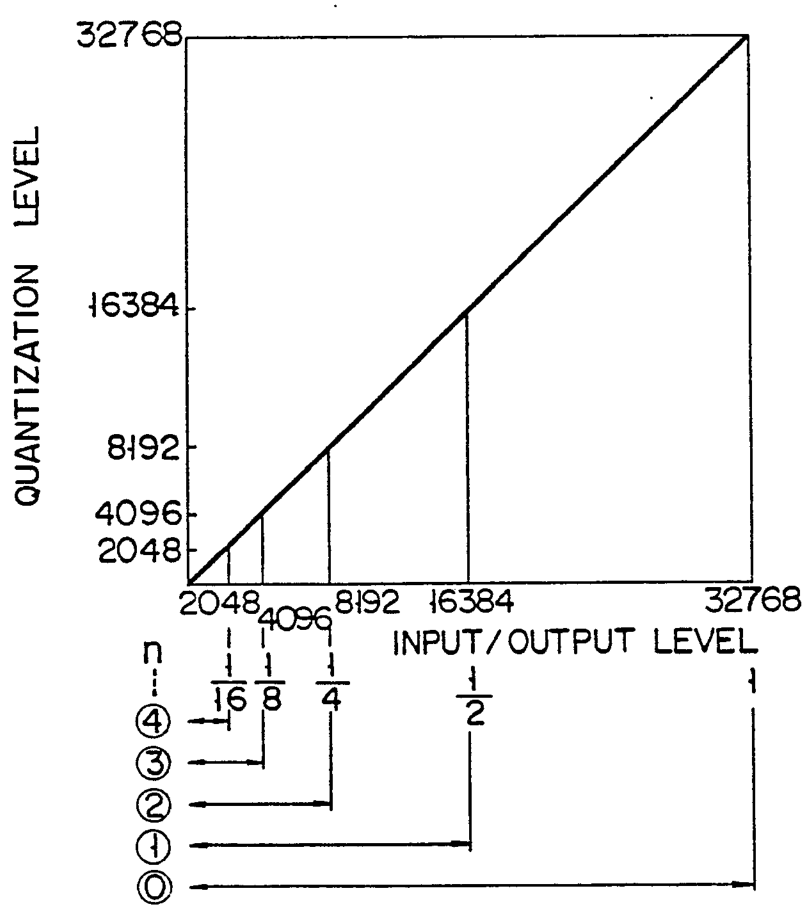
32768
QUANTIZATION LEVEL
16384
8192
4096
2048
2048
4096
8192
16384
32768
INPUT/OUTPUT LEVEL
n
1/16
1/8
1/4
1/2
1
④
③
②
①
⓪

FIG. 20

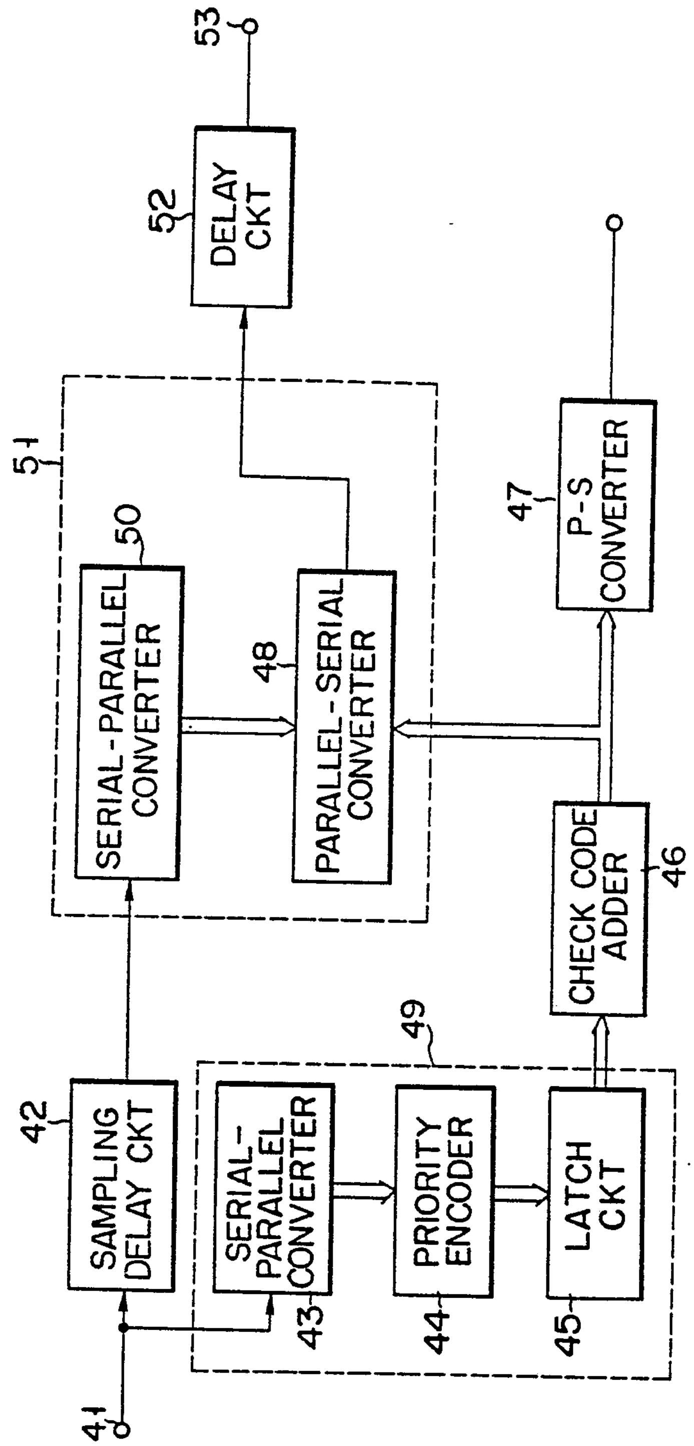
41
42
SAMPLING DELAY CKT
43
SERIAL-PARALLEL CONVERTER
44
PRIORITY ENCODER
45
LATCH CKT
49
CHECK CODE ADDER
46
P-S CONVERTER
47
SERIAL-PARALLEL CONVERTER
50
PARALLEL-SERIAL CONVERTER
48
51
DELAY CKT
52
53

FIG. 21

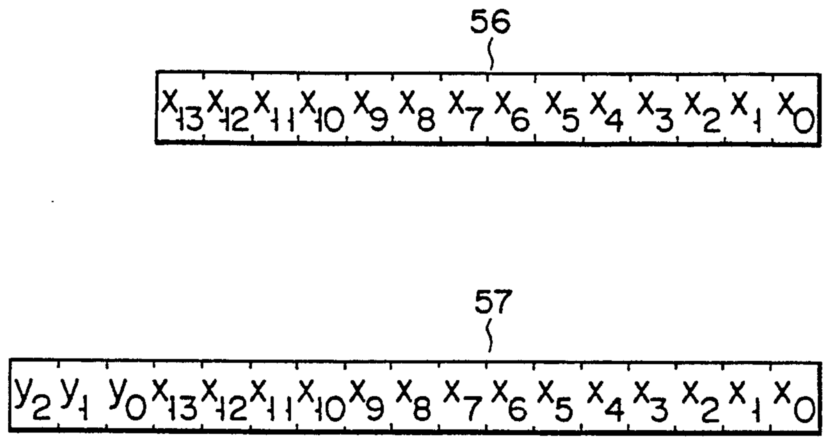
56
X13 X12 X11 X10 X9 X8 X7 X6 X5 X4 X3 X2 X1 X0
57
y2 y1 y0 X13 X12 X11 X10 X9 X8 X7 X6 X5 X4 X3 X2 X1 X0

FIG. 22

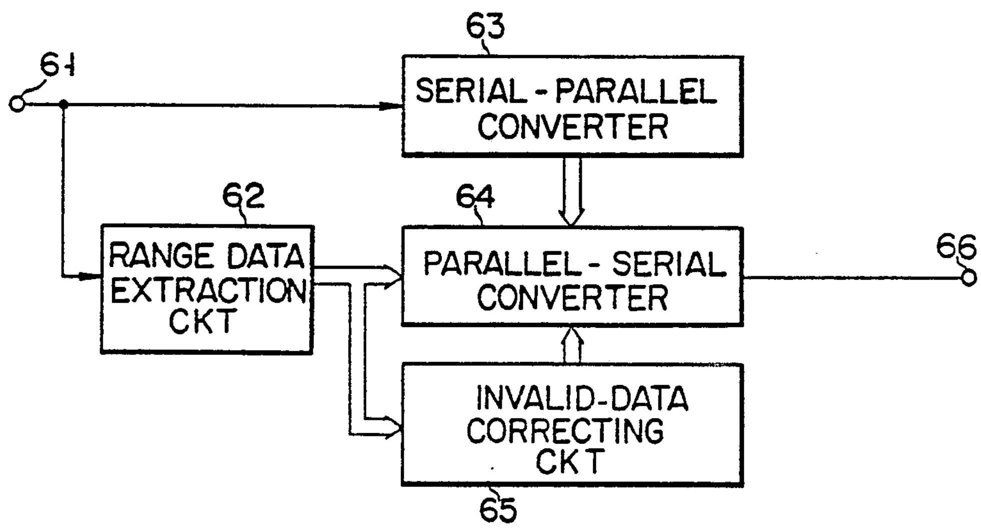
61
63
SERIAL - PARALLEL CONVERTER
62
RANGE DATA EXTRACTION CKT
64
PARALLEL - SERIAL CONVERTER
66
INVALID-DATA CORRECTING CKT
65

FIG. 23

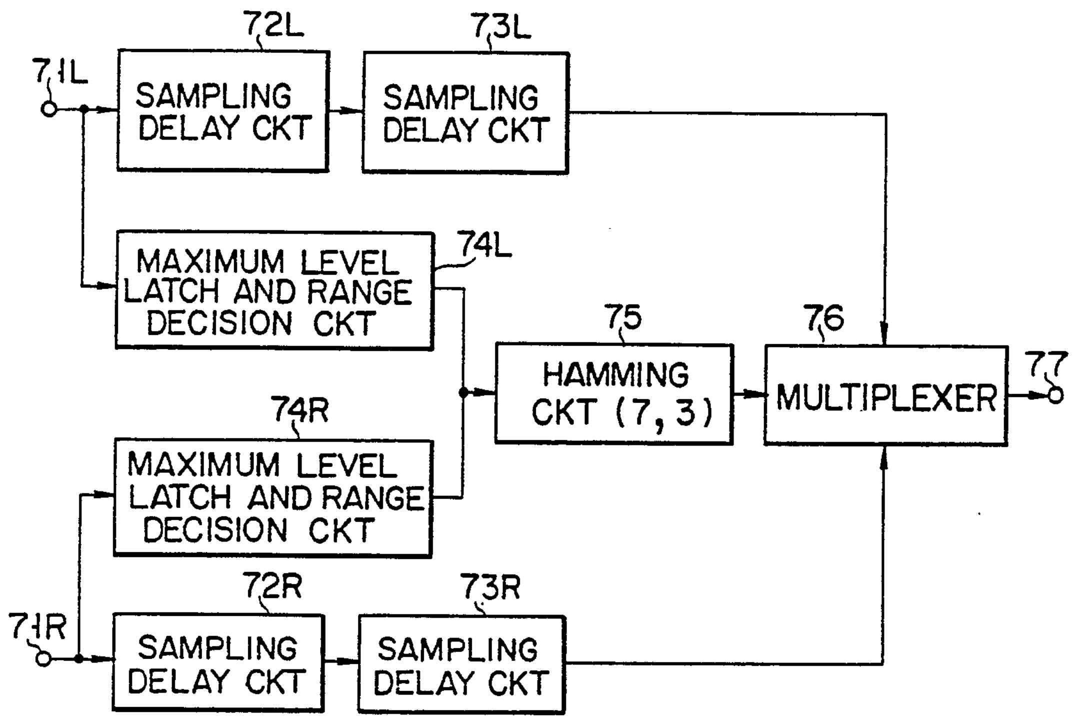
72L
73L
71L
SAMPLING DELAY CKT
SAMPLING DELAY CKT
MAXIMUM LEVEL LATCH AND RANGE DECISION CKT
74L
75
76
HAMMING CKT (7, 3)
MULTIPLEXER
77
74R
MAXIMUM LEVEL LATCH AND RANGE DECISION CKT
72R
73R
71R
SAMPLING DELAY CKT
SAMPLING DELAY CKT

FIG. 24

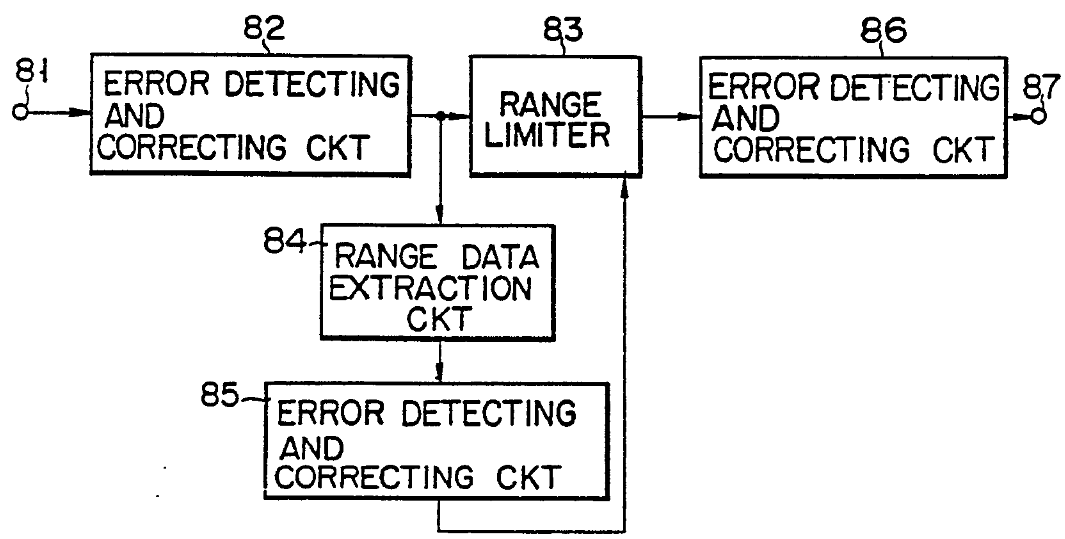
82
83
86
81
ERROR DETECTING AND CORRECTING CKT
RANGE LIMITER
ERROR DETECTING AND CORRECTING CKT
87
84
RANGE DATA EXTRACTION CKT
85
ERROR DETECTING AND CORRECTING CKT

FIG. 25

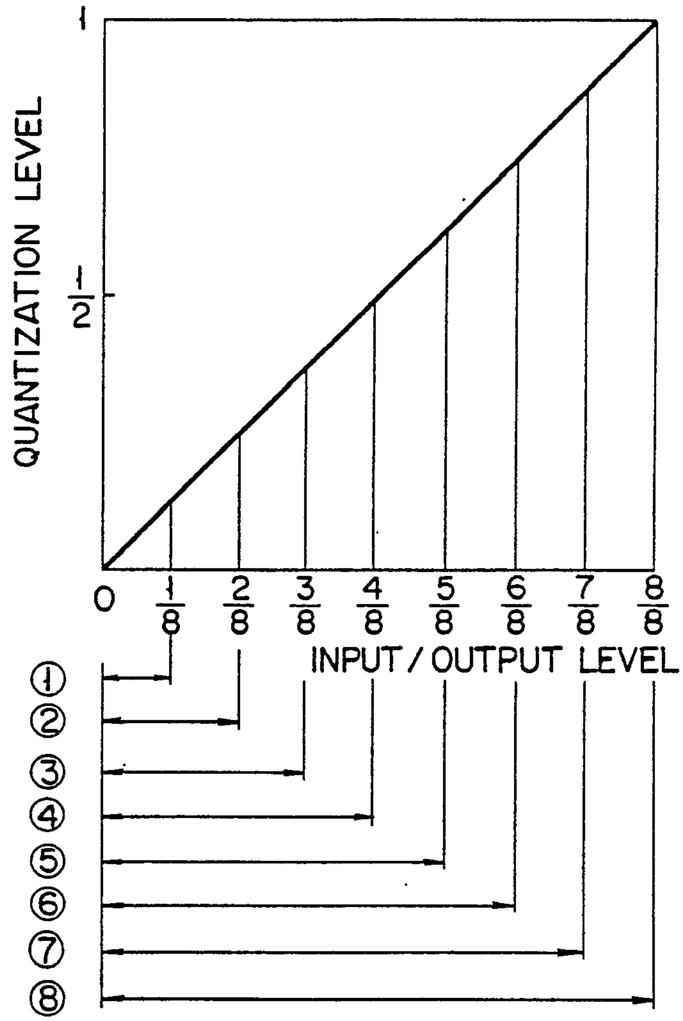
1
QUANTIZATION LEVEL
1/2
0
1/8
2/8
3/8
4/8
5/8
6/8
7/8
8/8
INPUT / OUTPUT LEVEL
①
②
③
④
⑤
⑥
⑦
⑧

FIG. 26

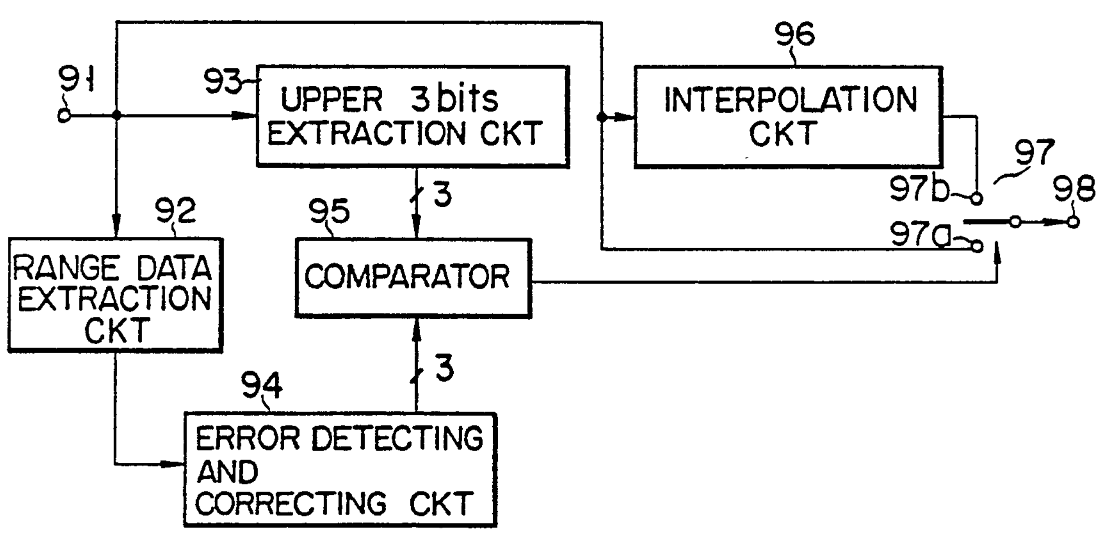
91
93
UPPER 3bits EXTRACTION CKT
96
INTERPOLATION CKT
97
97b
98
97a
92
RANGE DATA EXTRACTION CKT
95
3
COMPARATOR
3
94
ERROR DETECTING AND CORRECTING CKT

FIG. 27

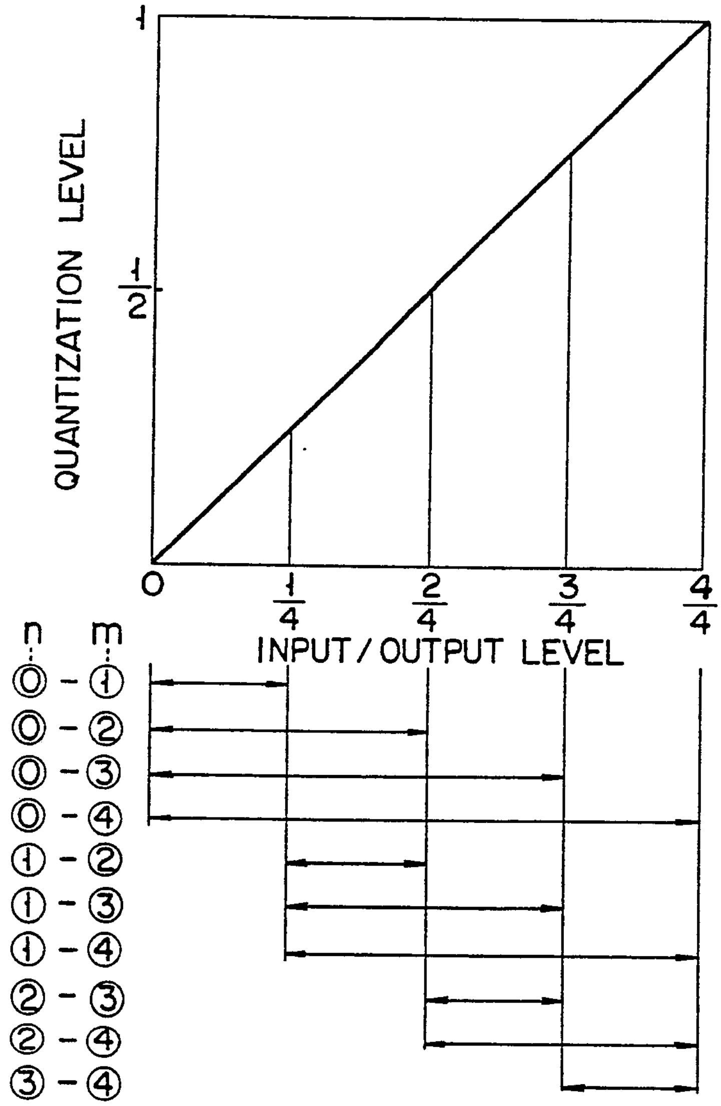
QUANTIZATION LEVEL
1
1/2
0
1/4
2/4
3/4
4/4
INPUT / OUTPUT LEVEL
n m
⓪ - ①
⓪ - ②
⓪ - ③
⓪ - ④
① - ②
① - ③
① - ④
② - ③
② - ④
③ - ④

FIG. 28

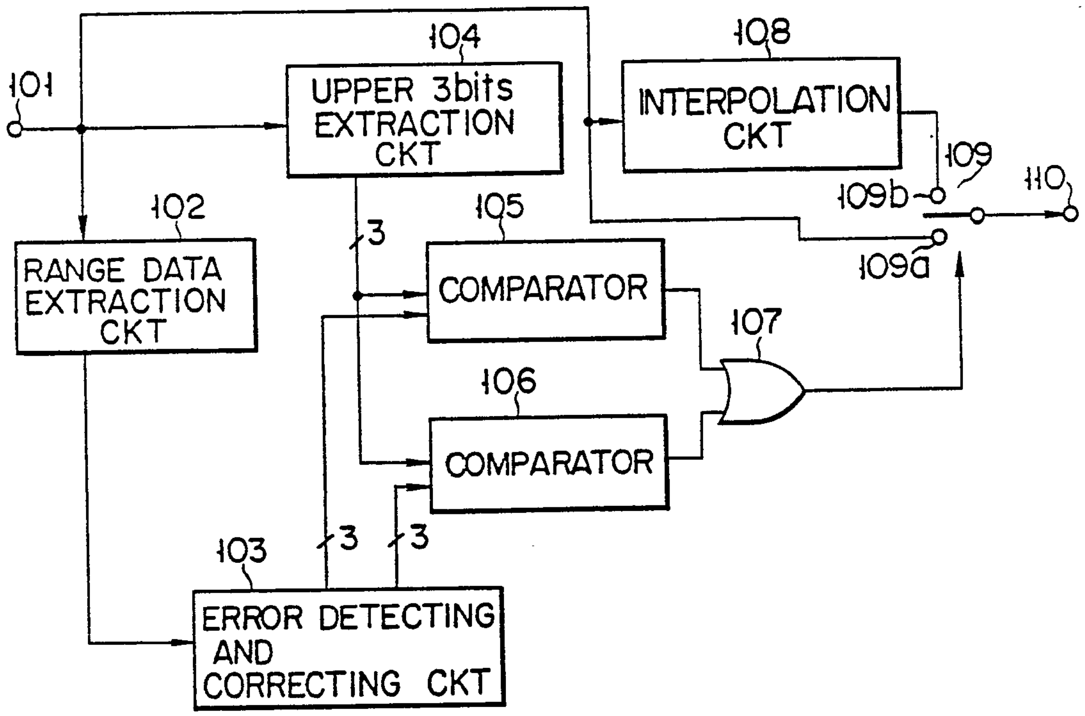
101
UPPER 3bits EXTRACTION CKT
104
INTERPOLATION CKT
108
109
110
109b
109a
RANGE DATA EXTRACTION CKT
102
3
COMPARATOR
105
107
COMPARATOR
106
103
3
3
ERROR DETECTING AND CORRECTING CKT

FIG. 29

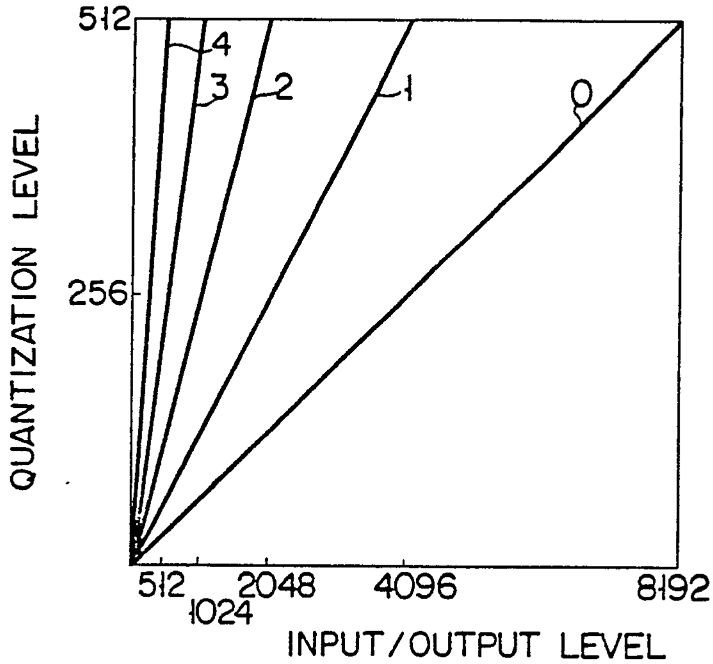
512
256
QUANTIZATION LEVEL
4
3
2
1
0
512
1024
2048
4096
8192
INPUT/OUTPUT LEVEL

FIG. 30

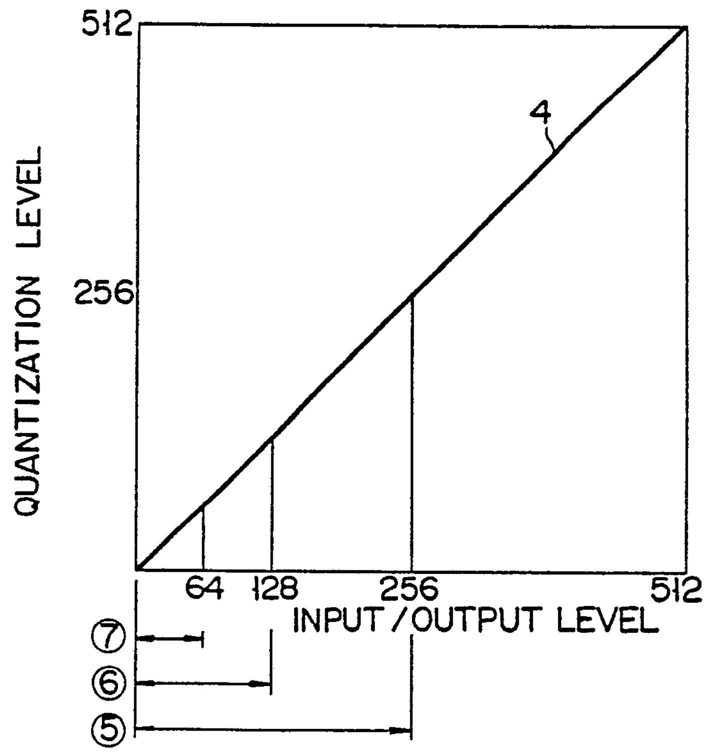
512
256
QUANTIZATION LEVEL
4
64
128
256
512
INPUT/OUTPUT LEVEL
⑦
⑥
⑤

FIG. 31

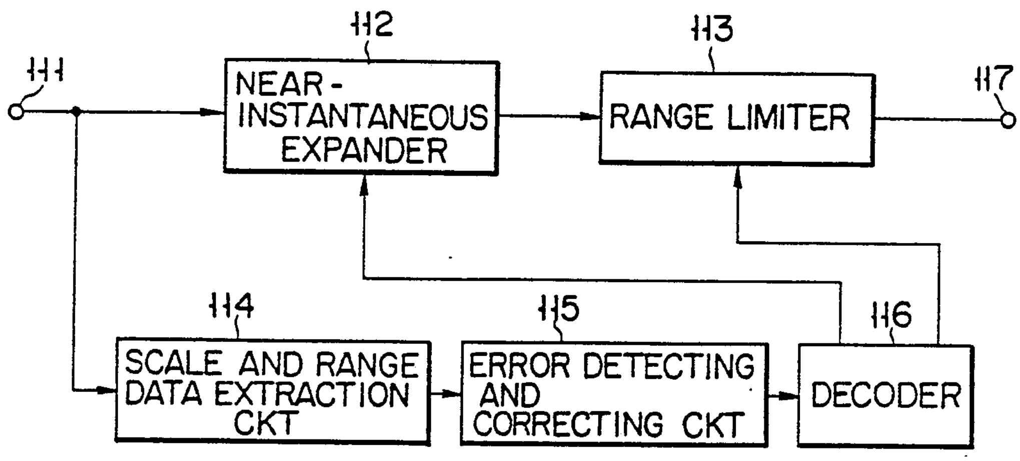
111
112
NEAR-INSTANTANEOUS EXPANDER
113
RANGE LIMITER
117
114
SCALE AND RANGE DATA EXTRACTION CKT
115
ERROR DETECTING AND CORRECTING CKT
116
DECODER